(19) Europäisches Patentamt
European Patent Office
Office européen des brevets

(11) EP 3 256 405 B1

(12) # EUROPEAN PATENT SPECIFICATION

(45) Date of publication and mention of the grant of the patent:
**19.12.2018 Bulletin 2018/51**

(21) Application number: **16706987.1**

(22) Date of filing: **10.02.2016**

(51) Int Cl.:
***B65F 1/10*** (2006.01) ***G01F 17/00*** (2006.01)

(86) International application number:
**PCT/EP2016/052778**

(87) International publication number:
**WO 2016/128432 (18.08.2016 Gazette 2016/33)**

(54) **AUXILIARY DEVICE FOR PUBLIC DUMPSTERS ADAPTED TO CONTROL THE VOLUME OF THE DISPOSED WASTE**

HILFSVORRICHTUNG FÜR ÖFFENTLICHE MÜLLDEPONIEN ZUR STEUERUNG DER ABFALLMENGE

DISPOSITIF AUXILIAIRE POUR BENNES PUBLIQUES CONÇU POUR CONTRÔLER LE VOLUME DES DÉCHETS JETÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.02.2015 IT TO20150093**

(43) Date of publication of application:
**20.12.2017 Bulletin 2017/51**

(73) Proprietor: **Adgenera S.r.l.**
**10135 Torino (IT)**

(72) Inventors:
- **FURANTI, Massimo**
  **46040 Monzambano (IT)**
- **ISAJA, Federico**
  **16039 Sestri Levante (IT)**

(74) Representative: **Modiano, Micaela Nadia et al**
**Modiano & Partners**
**Via Meravigli, 16**
**20123 Milano (IT)**

(56) References cited:
**WO-A1-2013/069029**
**DE-A1- 19 919 678**
**IT-A1- GE20 130 080**
**US-A1- 2001 045 512**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 256 405 B1

## Description

The present invention relates to an auxiliary device, of the kind of the preamble of claim 1, for public dumpsters adapted to control the volume of the disposed waste, and to a method of calculating the volume of the disposed waste. An auxiliary device according to the preamble of claim 1 and a related method for calculating the volume of the disposed waste are disclosed in DE 199 19 678 A1.

In order to incentivize the practice of sorted waste collection, it is known to equip public dumpsters with auxiliary devices that allow to control the quantity of waste disposed in the dumpster by the individual citizen.

A known device comprises a support that is mounted in an opening provided on the lid of the dumpster. The support accommodates a drum with a horizontal axis, which can rotate between two positions which are rotated with respect to each other by 180° under the actuation of a manually actuatable lever. In the drum a seat is defined that is sized to receive a standard-format waste bag. The drum is ususally locked in such a rotated position that the seat is directed toward the inside of the dumpster and therefore is not accessible, but it can be released by the user by inserting a magnetic identification card in the device. The control circuit recognizes the user who owns the card, releases the drum, and logs the disposal of a unit of waste by the specific user. At this point the user rotates the drum by means of the lever and inserts the waste bag, which is unloaded into the dumpster when the drum returns to the closed position.

Known devices such as the one cited above suffer drawbacks.

First of all, these devices allow to control only the number of disposals performed by the individual user but not the volume of the disposed waste, which obviously can be highly variable and can affect appreciably the calculation of the volume of waste attributed to each user. Therefore, in known systems this calculation is based substantially on statistical data which are inherently inaccurate.

Moreover, known devices are very bulky and usually protrude outside the dumpster, so that they are susceptible of damage by accidental impact or acts of vandalism.

Moreover, known devices use complex mechanisms for the system for loading/unloading the waste bags, which require frequent maintenance.

Furthermore, known systems are unable to detect any improper uses, for example if the user, after inserting the card and releasing the drum, changes his/her mind and decides to hold the bag for any reason.

Not least, the disposal of waste by means of the system described above is very costly in terms of time, especially if the user has to unload a plurality of bags of waste in a single session, also in relation to the fact that the seat generally has a rather limited size and therefore allows to introduce only relatively small bags.

Therefore, the aim of the present invention is to provide an auxiliary device for public dumpsters that is capable of overcoming the drawbacks mentioned above of known devices, particularly allowing to measure more precisely the volume of waste disposed by every single user, with a system that is more sturdy, more reliable and more practical in relation to any insertion of bulky bags or many bags at a time.

This aim and these and other advantages, as will become better apparent hereinafter, are achieved by the auxiliary device for public dumpsters having the characteristics presented in claim 1, while the dependent claims define additional advantageous but secondary characteristics of the invention. Furthermore, a method according to the present invention is disclosed in claim 8.

The invention is now described in greater detail with reference to some preferred but not exclusive embodiments thereof, illustrated by way of nonlimiting example in the accompanying drawings, wherein:

Figure 1 is a partially exploded perspective view of a public dumpster preset for the insertion of an auxiliary device according to the invention, also shown in an aligned position for mounting;
Figure 2 is an enlarged-scale perspective view of the auxiliary device of Figure 1;
Figure 2a is a side elevation view of an assembled component of Figure 2;
Figure 2b is a front elevation view of the assembled component of Figure 2;
Figure 3 is a schematic plan view of the auxiliary device of Figure 2;
Figure 4 is a schematic sectional view of Figure 3 along the line IV-IV;
Figure 5 is a flowchart showing the operation of the auxiliary device according to the invention;
Figure 6 is a flowchart showing a subroutine of the operation of the auxiliary device according to the invention;
Figure 7 is a view of a sequence of signals generated during the operation of the auxiliary device of Figure 2;
Figures 8-11 are views, similar to Figure 4, showing the device in four successive steps of regular use of the device;
Figures 12-14 are views, similar to Figure 4, showing four successive steps of improper, but allowed, use of the device;
Figure 15 is a view of a sequence of signals generated during the steps shown in Figures 12-14;
Figures 16-21 are views, similar to Figure 4, showing six successive steps of improper use of the device;
Figure 22 is a view of a sequence of signals generated during the steps shown in Figures 16-21;
Figures 23-29 are views, similar to Figure 4, showing seven successive steps of improper use of the device;
Figure 30 is a view of a sequence of signals generated during the steps shown in Figures 23-29;

Figure 31 is an exploded perspective view that shows schematically a first alternative embodiment of the auxiliary device according to the invention;

Figure 31a is a flowchart showing a subroutine of the operation of the auxiliary device in the embodiment of Figure 31;

Figure 32 is a view, similar to Figure 2, showing a second alternative embodiment of the auxiliary device according to the invention;

Figure 33 is a flowchart that illustrates the operation of the auxiliary device of Figure 32;

Figure 34 is a view of a sequence of signals generated during the operation of the auxiliary device in the alternative embodiment of Figure 32;

Figure 35 is a view, similar to Figure 2, showing a third alternative embodiment of the auxiliary device according to the invention;

Figure 36 is a view, similar to Figure 3, showing a fourth alternative embodiment of the auxiliary device according to the invention.

The present invention relates to public waste dumpsters, e.g., dumpsters of the type generally designated by 10 in Figure 1. The dumpster 10 is provided with a lid 12 that is usually locked in the closed configuration but can be opened by waste collectors to empty the dumpster.

A rectangular hole (not visible) for the installation of an auxiliary device 16 adapted to control the volume of the disposed waste, according to the present application, is provided in the lid 12.

With reference to Figures 1-4, the auxiliary device 16 according to the invention comprises a tubular support 17 that has a rectangular, preferably square, profile and is open at its opposite ends 17a, 17b. A first end, or inlet end 17a, of the tubular support 17 is fixed to a rectangular fascia 18 that is adapted to be bolted to the edge of the hole on the lid 12, with the opposite end, or outlet end 17b, directed toward the inside of the dumpster 10. The fascia 18 has a first square opening 18a at the inlet end 17a of the tubular support 17, and a second square opening 18b that accommodates a solar panel 19. The fascia 18 further has two additional rectangular openings 18c, 18d, which accommodate respectively an identification code reader 20 and a display 21, all of which is connected to a control unit 22 that integrates a GSM interface (not shown) or another wireless communication interface. The control unit 22 is fixed to the fascia 18 by means of brackets 22a, 22b.

The tubular support 17 has two mutually opposite upper rectilinear slots 23, 24 on respective two opposite sides thereof, which are extended transversely - i.e., in a direction at right angles to the axis - proximate to the inlet end 17a.

A first series S1 of infrared emitters 26 is supported on the outside of the tubular support 17 along a first one of the two rectilinear slots 23 and faces corresponding infrared receivers 28 supported on the outside of the tubular support 17 along the opposite rectilinear slot 24.

With reference to Figures 2, 2a and 2b, the infrared emitters 26 are embedded in a resin rod 30, which is supported by a metallic profiled element 31. The profiled element is delimited by two opposite coplanar longitudinal wings 31a, 31b, by means of which it is fixed to the inner surface of the tubular support 17. A channel 31c is defined between the wings 31a, 31b and is adapted to accommodate the rod 30, which protrudes toward the outside of the tubular support 17 through the slot 23. The channel 31c has a lower face 31'c that is inclined downwardly for drainage and is closed at the front by a covering plate 32 that has a series of holes 33 at the emitters 26. In this manner, the emitters 26 are protected against luminous interference originating from the outside that might compromise the operation of the device.

The infrared receivers 28 are supported in a manner similar to the infrared emitters 26 and therefore the description is not repeated for them.

The infrared emitters 26 and the infrared receivers 28 of the first series are preferably all mutually equidistant (Figure 3) and are extended at right angles to the axis of the tubular support 17 at a first level L1 that is closer to the upper end 17a of the tubular support 17 (Figure 4).

A second series S2 of infrared emitters 34 and of infrared receivers 36 perpendicular to the former, so as to define a grid in projection (Figure 3), is supported downstream of the first series S1 with respect to the waste insertion direction.

In particular, the infrared emitters and the infrared receivers of the second series S2 face respective two mutually opposite lower rectilinear slots 38, 40 that are extended transversely on the other two opposite sides of the tubular support 17 proximate to its outlet end 17b. The infrared emitters and the infrared receivers of the second series S2 are supported in a manner similar to the infrared emitters and infrared receivers of the first series S1.

The infrared emitters 34 and the infrared receivers 36 of the second series S2 also are all mutually equidistant and are extended at right angles to the axis of the tubular support 17. The second series S2 is arranged at a second level L2 that is closer to the outlet end 17b of the tubular support 17, which is spaced from the first level L1 by an interval D (Figure 4).

For the sake of convenience in description, hereinafter the assembly composed by an infrared emitter and receiver will be referenced as a whole as "infrared sensor" or more briefly "sensor".

The infrared sensors of the first series and of the second series, which are arranged on respective two mutually perpendicular rows, have the purpose of monitoring respective transit areas adapted to be crossed by the waste disposed in the dumpster through the tubular support 17.

The inlet end 17a of the tubular support 17 is closed by a door 45 with a handle 45a. The door 45 is provided with an opening/closing switch 46, with a hydraulic return spring 47 arranged so as to actuate the door 45 in the closed position, with an electrically controlled lock 48, and with a mechanical contrast spring 49 adapted to facilitate the opening of the door 45.

All the electrical/electronic components of the device are connected to the control unit 22 and are powered by the solar panel 19 with the aid of a battery 50 accommodated in a respective battery holder 51.

With reference to Figure 5, operation of the device according to the invention is now described.

The control unit 22 is programmed to enable the opening of the door 45 on the basis of the recognition of an identification code, which in this example of embodiment is provided on a card (Figure 4) that can be given to the user by the organization that manages municipal waste collection.

In the block 100, the control unit is ready to read the card by means of the reader 20. In the block 110, the card is inserted in the reader 20. In the block 120, the code is verified. If the code is recognized, the control unit 22 releases the door 45 (block 130) by means of the electrically controlled lock 48. In the block 140, the control unit 22 checks whether at least one sensor has switched (i.e., whether at least one infrared beam of the first series S1 has been interrupted by waste disposed in the dumpster). If no sensor has switched, in the block 150 the control unit checks, by means of the switch 46, whether in the meantime the door 45 has been closed. If it has, in the block 155 the control unit 22 locks the door 45, the procedure resumes from the initial block 100, and no disposal is recorded; if it has not, in the block 140 the control unit waits for the switching of at least one sensor, to indicate that a bag of waste has been introduced in the monitored region. Upon the switching of at least one sensor, in the block 160 the control unit checks whether there has been a change of mind (hereinafter, this verification will be referenced as "change-of-mind check"), on the basis of a control logic that allows to identify any misuses of the device by the user. The change-of-mind check is described in detail hereinafter with reference to the flowchart of Figure 6.

In case of a change of mind, the procedure resumes from the block 150. In the opposite case, i.e., in case of regular use, in the block 170 the control unit calculates the volume of the waste disposed on the basis of the formula:

$$V = A*v*t$$

where V is the calculated volume, A is the area or transverse space occupation of the item (bag of waste), v is the falling speed, and t is the transit time: each one of these elements will be defined in detail hereinafter.

Assuming a vertical fall of the bag, the transverse space occupation A can be calculated advantageously by means of the formula

$$A = a(1+p)*b(1+q),$$

where a is the center distance between the sensors of the first series S1, b is the center distance between the sensors of the second series S2 (Figure 3), while p and q indicate the number of light beams interrupted by the bag when it passes respectively through the first series S1 and the second series S2.

The falling speed v is obtained advantageously as a function of the speeds $v_1 = D/t_1$ and $v_2 = D/t_2$, where:

- $v_1$ is the entry speed of the item in motion between the series S1 and S2, calculated on the basis of the up-switchings from 1 to 0 of the respective sensors,
- $v_2$ is the exit speed of the item between the series S1 and S2, calculated on the basis of the down-switchings from 1 to 0 of the respective sensors,
- D has already been defined as the distance between the series S1 and S2,
- $t_1$ is the time that elapses from when the first sensor of the first series S1 switches up from 0 to 1 to when the first sensor of the second series S2 switches up from 0 to 1 (see Figure 7) and
- $t_2$ is the time that elapses from when the first sensor of the first series S1 switches down from 1 to 0 to when the first sensor of the second series S2 switches down from 1 to 0 (see Figure 7).

The transit time t is advantageously obtained as a function of the switching time $t_{S1}$ of the first series S1 and of the switching time $t_{S2}$ of the second series S2 (Figure 7). For example, it is possible to choose the shortest of the two times, assuming that the bag might be held artificially between the first series and the second series. In this regard, advantageously it is possible to provide a timeout time that corresponds to a maximum plausible length for the bag.

Once the volume V has been calculated, the control unit transmits to the organization that manages municipal waste collection the calculated value associated with the specific user via GSM for subsequent processing. Then the procedure resumes from block 150. It is important to note that as long as the door is not closed, the control unit remains waiting for the insertion of a new bag of waste, with the procedure resuming from block 140.

Figures 8-11 show in succession the steps of a regular insertion of the bag B in the dumpster through the auxiliary device 16 according to the invention. In Figure 8, after the code in the card C has been recognized, the door 45 opens, the bag B is inserted in the tubular support 17 and crosses the first series S1 of infrared beams. In Figure 9, the bag B engages both series of infrared beams S1 and S2. In Figure 10, the bag B has moved beyond the upper series S1 but still engages the lower series S2. In Figure 11, the bag B has moved beyond both series S1 and S2: the disposal process has ended, the door 45 closes and the user can extract the card C.

The change-of-mind check is now described with reference to the flowchart of Figure 6.

Such check has the purpose of detecting any misuses of the device, in particular, situations in which the user introduces the waste through the inlet end 17a of the tubular support 17 but decides to extract it before allowing it to fall, or holds the bag in front of the sensors for a time that is longer than the time provided if the bag were in free fall, or again performs both of the above cited actions.

In the block 180, the transverse space occupation of the inserted item is calculated a first time by means of the formula defined earlier. Such space occupation is indicated as $A_{in}$.

In the block 190, the control unit 22 checks whether at least one sensor of the second series S2 has switched up from 0 to 1.

If it has not, in the block 200 the control unit checks whether at least one sensor of the first series S1 has switched down from 1 to 0. This allows to check whether the item, after crossing the first series S1, is removed from the dumpster 10 before crossing the second series S2 as well. These steps are shown in Figures 12-14 and correspond to the sequence of signals of Figure 15. If the first series S1 switches down from 1 to 0, in the block 210 a misuse event is identified and counted, all the values of areas and speeds calculated up to that moment are deleted, and the procedure resumes from the block 150, optionally after applying a penalty to the profile of the user (block 220). If the first series S1 does not switch from 1 to 0, the procedure resumes from the block 190.

When the second series S2 switches up from 0 to 1, in the block 230 the entry speed $v_1$, already defined earlier in relation to the calculation of the volume V, is calculated.

In the block 240, the control unit 22 checks whether at least one sensor of the first series S1 has switched down from 1 to 0.

If it has not, this may mean that the user is following with his/her hand the waste toward the bottom of the dumpster 10 and crosses the grid of infrared beams with his arm. Accordingly, in the block 250 the control unit 22 checks whether the second series S2 has switched down from 1 to 0. If it has not, the procedure resumes from the block 240. If it has, in the block 260 the switching time of the second series $t_{S2}$ is calculated and then the first series S1 switches down from 1 to 0 (block 270); then, in block 280 the switching time of the first series $t_{S1}$ is calculated. In the block 290 the transverse space occupation across the first series S1 is then recalculated, said recalculated space occupation being now defined as $A_{out}$. In the block 300, the two measurements of the transverse space occupation $A_{in}$ and $A_{out}$ across the first series S1 are compared. $A_{in} \neq A_{out}$ is indicative of the fact that the user may have inserted his/her arm through the series S 1 and S2 to follow the disposed waste, then allowed the waste to fall toward the internal bottom of the dumpster 10, and finally removed his/her arm (the transverse cross-section of the arm being presumably smaller than the transverse cross-section of the bag). These steps are shown in Figures 16-21 and correspond to the sequence of signals of Figure 22. In this case, the use of the device is in any case allowed and the procedure resumes from the block 310, which will be described in greater detail hereinafter. $A_{in} = A_{out}$ is indicative of the fact that the user is misleading the system, removing not only his/her arm but also the waste. These steps are shown in Figures 23-29 and correspond to the sequence of signals of Figure 30. In this case, therefore, the procedure resumes from the block 210 already described.

When the first grid, in the block 240, switches down from 1 to 0, this means that the waste is correctly falling toward the bottom of the dumpster 10. Therefore, in the block 320 the switching time of the first series $t_{S1}$ is calculated. In the block 330 the second series S2 also switches down from 1 to 0.

In the block 340 the control unit calculates the exit speed $v_2$ of the item already defined previously in relation to the calculation of the volume V. In the block 350 the switching time of the second series $t_{S2}$ is calculated.

In the block 360 the falling speed v is calculated as the average between the entry speed $v_1$ and the exit speed $v_2$. Finally, in the block 310 the time t is calculated as a function of the switching time of the first series $t_{S1}$ and of the switching time of the second grid $t_{S2}$, as described previously.

At this point all the elements for calculating the volume V in the block 170 of the flowchart of Figure 5 are available.

As the person skilled in the art can easily observe, the auxiliary device according to the invention achieves effectively the intended aim and objects, allowing not only to detect the number of disposals by each individual user but also the volume of the disposed waste, with a precision that can be determined according to the number of sensors used; obviously, the larger the number of sensors on each plane, the more the calculation of the volume is precise.

Moreover, the device according to the invention can be arranged entirely inside the dumpster, so as to be protected against accidental impacts or acts of vandalism.

Moreover, the device according to the invention utilizes infrared sensors, which, in addition to being relatively inexpensive with respect to the mechanisms used by conventional systems for loading/unloading bags of waste, require extremely low maintenance.

Moreover, the device according to the invention is also capable of detecting any misuses, so as to also have high reliability.

Not least, the device according to the invention allows to dispose of a plurality of waste bags at once, since after the volume V of the bag has been calculated in the block 170 of Figure 5 the system remains in standby, waiting for the insertion of a new bag, until the door 45 is closed. This allows to accelerate the disposal operations.

Figure 31 shows a first alternative embodiment of the invention, which differs from the preceding one in that the sensors on each of the two levels are arranged on two mutually perpendicular rows, so as to define respective two grids G1, G2 of infrared beams that are mutually spaced.

In this embodiment, the transverse space occupation A' can be calculated advantageously as an average value between the area measured across the first beam $A'_{G1}$ and the area measured across the second beam $A'_{G2}$, according to the formula:

$$A' = \frac{A'_{G1} + A'_{G2}}{2}$$

$A'_{G1}$ and $A'_{G2}$, in a manner similar to the previous embodiment, in which the sensors were always arranged along two mutually perpendicular rows, although in that case they were not coplanar, are given respectively by the formulas

$$A'_{G1} = a'(1+p'_{G1})*b'(1+q'_{G1})$$

$$A'_{G2} = a'(1+p'_{G2})*b'(1+q'_{G2})$$

where a' and b' are the center distances between the sensors along respective two perpendicular sides of the grids G1 and G2 (Figure 3), $p'_{G1}$ and $q'_{G1}$ indicate the number of light beams interrupted by the bag when it crosses the first grid G1 along respective two perpendicular sides thereof, $p'_{G2}$ and $q'_{G2}$ indicate the number of light beams interrupted by the bag when it crosses the second grid G2 along respective two perpendicular sides thereof.

For the operation of the device in this embodiment of the invention it is possible to reference again the flowchart of Figure 5. The change-of-mind check, shown in Figure 31a, also is entirely similar to the preceding embodiment. The similar blocks are identified by the same reference numerals of Figure 6, with the addition of a prime. In particular, $A'_{G1in}$ and $A'_{G1out}$ indicate the transverse area measured across the first grid G1 respectively in input and in output, while $t_{G1}$ e $t_{G2}$ indicate respectively the switching time of the first grid G1 and the switching time of the second grid G2.

Figure 32 shows a second alternative embodiment of the invention, which differs from the preceding one in that the sensors are arranged on two mutually perpendicular rows but on a single plane, thus defining a grid G". In this case, therefore, it is not possible to perform the change-of-mind check.

The flowchart of Figure 33 describes the operation of the control unit 22 in this second alternative embodiment; the similar blocks are identified by the same reference numerals as Figure 5 with the addition of a double prime. The flowchart of Figure 33 differs from the flowchart of Figure 5 in that the block in which change-of-mind checking is performed, and which in the previous embodiment corresponded to the block 160, is not present. Moreover, in this case the formula for volume calculation, which is performed in the block 170", is always:

$$V'' = A''*v''*t''$$

where V" is the calculated volume, A" is the transverse space occupation of the item, v" is the falling speed, and t" is the transit time, which in this embodiment can only be constituted by the switching time of the single grid G" (Figure 34).

The transverse space occupation A" is calculated always on the basis of the formula:

$$A'' = a''*(1+p'')*b''(1+q'')$$

where a" and b" are the center distances between the sensors along respective two perpendicular sides of the grid G', p" and q" indicate the number of light beams crossed by the bag respectively along said two perpendicular sides of the grid G'.

The falling speed v" can be calculated approximately from the formula

$$v'' = \sqrt{2gh}$$

which has been obtained from the law of conservation of mechanical energy, where g is the acceleration of gravity and h is the presumed distance between the point where the bag is released by the user and the grid G'.

Figure 35 shows a third alternative embodiment of the invention, in which the sensors are arranged on two planes but on a single row, so as to generate beams that are all mutually parallel. Furthermore, the tubular support 317 has a cylindrical profile so that the monitored region has a circular profile instead of a rectangular one.

In this case, the flowchart that describes the operation of the control unit is similar to the flowchart of Figure 5, except for the calculation of the transverse space occupation, which can be performed on the basis of geometric considerations that are not described here since they are within the grasp of the person skilled in the art who is aware of the teachings given above.

A further alternative embodiment of the invention, not shown, can be provided in which at a first level there is a series of sensors, according to one of the embodiments described and illustrated above, for the purpose of calculating space occupation, while at a second level, which is spaced from the first one with respect to the direction of waste insertion, there is a single additional sensor adapted to detect the passage of the bag for a more precise calculation of the falling speed and/or transit time, on the basis of the formulas indicated in the two previous embodiments, and for performing the change-of-mind check.

Obviously, many further embodiments of the invention, which differ from each other in the profile of the monitored region and in the arrangement of the sensors, are possible. By way of example, Figure 36 shows a fourth alternative embodiment of the invention, in which the tubular support 417 has a cylindrical profile and the sensors are arranged on one or two planes along its internal perimeter, so as to generate a grid of beams that cross with angles which can be even different from 90°. In this case also, the volume can be calculated automatically on the basis of formulas that can be derived by the person skilled in the art.

Some preferred embodiments of the invention have been described, but obviously the person skilled in the art can apply various modifications and variations within the scope of the appended claims. For example, although the preferred embodiment uses a magnetic card reader to recognize the user, it is of course possible to use any other suitable system, such as a USB drive, a tax code reader, and the like. Furthermore, in the preferred embodiment the auxiliary device is provided with a GSM interface for wireless realtime transmission of the acquired data. Obviously, as an alternative the data might be stored by the control unit and picked up periodically, for example by waste collectors upon emptying the dumpsters. The GSM interface also can be replaced by any other wireless communication interface. Furthermore, the supply of power of the device by means of solar panels is to be considered a solution that is useful but not indispensable, since other solutions, such as battery power, are possible. Furthermore, the display can be replaced by another visual interface, such as for example a series of flashing colored LEDs. Obviously, depending on the shape of the dumpster, the device can be installed both on the lid and on any other wall of the dumpster. In this regard, if the monitoring planes of the sensors are not arranged horizontally, i.e., parallel to the ground, it is possible to provide a corrective coefficient in the calculation of the falling speed and in the calculation of the transverse space occupation. Furthermore, diagnostic systems can be provided which are adapted to identify malfunctions or tampering, their design being within the field of the usual knowledge of the person skilled in the art and therefore not being delved into here.

**Claims**

1. An auxiliary device for dumpsters adapted to control the volume of the disposed waste, comprising:

   - a substantially tubular support (17) which is adapted to be installed in an opening defined on the wall of a dumpster (10) and has an open inlet end (17a) facing the outside of the dumpster and an open outlet end (17b) facing the inside of the dumpster (10),
   - a door (45) applied to said inlet end (17a) and provided with automatically controlled opening/closing means (48),
   - an identification code reader (20),
   - at least a first series of sensors (26, 28, S1) which are arranged to monitor a first transit area (L1) crossed by the waste introduced in the dumpster (10) through said tubular support (17),
   - a control unit (22), which is programmed to enable the opening of said door (45) upon recognition of the identification code detected by the reader (20), **characterized in that** the first series of sensors is a first series of infrared sensors (26, 28, S1). **in that** it comprises at least one further infrared sensor arranged to monitor a second transit area (L2) that is spaced from said first transit area (L1) along the direction of insertion of the waste in the tubular support (17), and **in that** the control unit (22) is programmed to determine the volume of the disposed waste on the basis of the number of infrared sensors that switch when the waste is introduced in the tubular support (17).

2. The auxiliary device according to claim 1 , **characterized in that** it comprises a second series of infrared sensors (34, 36, S2) arranged to monitor said second transit area (L2).

3. The auxiliary device according to claim 2 , **characterized in that** the infrared sensors of said first series (26, 28) and the infrared sensors of said second series (34, 36, S2) are arranged along two respective rows at right angles to each other.

4. The auxiliary device according to claim 1 or 2, **characterized in that** the infrared sensors of said first series are arranged along two substantially coplanar rows at right angles to each other so as to define a first grid (G1, G") of infrared beams.

5. The auxiliary device according to claim 2, **charac-**

**terized in that** the infrared sensors of said second series are arranged along two substantially coplanar rows at right angles to each other so as to define a second grid (G2) of infrared beams.

**6.** The auxiliary device according to one or more of claims 1 to 5, **characterized in that** said at least one series of infrared sensors comprises a series of infrared emitters (26) and a series of opposite infrared receivers (28) which are embedded in respective resin rods (30), each supported by a profiled element (31) in which a channel (31c) is provided for receiving the rod (30), said channel (31c) having a lower face (31'c) that is inclined downwardly for drainage and being frontally closed by a covering plate (32) provided with a series of holes (33) aligned with said infrared emitters (26) and said infrared receivers (28).

**7.** The auxiliary device according to one or more of claims 1 to 6, **characterized in that** it comprises a wireless communication interface for transmission of the collected data related to a specific user.

**8.** A method for calculating the volume of the disposed waste by means of an auxiliary device of the kind comprising:

- a substantially tubular support (17) which is adapted to be installed in an opening defined on the wall of a dumpster (10) and has an open inlet end (17a) facing the outside of the dumpster and an open outlet end (17b) facing the inside of the dumpster (10),
- a door (45) applied to said inlet end (17a) and provided with automatically controlled opening/closing means (48),
- an identification code reader (20),
- at least a first series of infrared sensors (26, 28, S1) which are arranged to monitor a first transit area (L1) crossed by the waste introduced in the dumpster (10) through said tubular support (17),
- a control unit (22), which is programmed to enable the opening of said door (45) upon recognition of the identification code detected by the reader (20) and to determine the volume of the disposed waste on the basis of the number of infrared sensors that switch when the waste is introduced in the tubular support (17),

wherein said control unit (22) is programmed to calculate said volume V of the disposed waste based on the formula:

$$V = A*v*t$$

wherein

- A is the transverse space occupation of the waste, calculated as a function of the number of interrupted infrared beams,
- v is a calculated falling speed,
- t is a calculated transit time.

**9.** The method according to claim 8, wherein said device comprises at least one further infrared sensor arranged to monitor a second transit area (L2) that is spaced from said first transit area (L1) along the direction of insertion of waste in the tubular support (17), **characterized in that**

- said calculated falling speed is obtained as a function of an entry speed $v_1 = D/t_1$ and of an exit speed $v_2 = D/t_2$, wherein D is the distance between said first transit area (L1) and said second transit area (L2), $t_1$ is the time that elapses between when the first sensor of the first series (S1) switches up from 0 to 1 and when said at least one further infrared sensor switches up from 0 to 1, and $t_2$ is the time that elapses between when the first sensor of the first series (S1) switches down from 1 to 0 and when said at least one further infrared sensor switches down from 1 to 0; and
- said calculated transit time is chosen as a function of the switching time of said first series ($t_{S1}$) and the switching time of said at least one further infrared sensor ($t_{S2}$).

**10.** The method according to claim 8 or 9, wherein said device comprises two rows of infrared sensors which are mutually perpendicular, **characterized in that** said transverse space occupation (A) is calculated based on the formula

$$A = a(1+p)*b(1+q),$$

wherein a is the center distance between the sensors of the first row (S1), b is the center distance between the sensors of the second row (S2), and p and q are the number of light beams of the first row (S1) and of the second row (S2) respectively that are interrupted by the waste introduced in the dumpster through said tubular support (17).

**11.** The method according to claim 9, **characterized in that** before calculating the volume said control unit (22) is programmed to execute a change-of-mind check comprising the steps of:

- calculating the transverse area of the waste that passes through said first grid ($A_{in}$),

- checking whether at least one sensor of said second series (S2) has switched up from 0 to 1 and,
- if it has not, checking whether at least one sensor of said first series (S1) has switched down from 1 to 0 and, if not, resuming from the preceding step, otherwise counting a misuse event,
- if it has, calculating said inlet speed $v_1$;
- checking whether at least one sensor of the first series (S1) has switched down from 1 to 0 and,
- if it has not, checking wether at least one sensor of the second series (S2) has switched down from 1 to 0 and,
- if it has not, resuming from the preceding step, otherwise calculating said switching time of the first series ($t_{S1}$), waiting for said first series to switch down from 1 to 0, calculating said switching time of the first series ($t_{S1}$), recalculating the transverse space occupation of the waste that passes through said first series ($A_{out}$) and comparing it with the preceding measurement of the transverse space occupation ($A_{in}$) and, if they are the same, counting a misuse event, otherwise choosing said transit time (t),
- if it has, calculating said switching time of the first series ($t_{S1}$), waiting for said second series (S2) to switch down from 1 to 0, calculating said outlet speed ($v_2$), calculating said switching time of the second series ($t_{S2}$), calculating said falling speed (v), and choosing said transit time (t).

12. A dumpster **characterized in that** it comprises an auxiliary device according to one or more of claims 1 to 7

## Patentansprüche

1. Eine Hilfsvorrichtung für Müllcontainer zur Kontrolle des Abfallvolumens, die Folgendes umfasst:

- einen im Wesentlichen rohrförmigen Träger (17), der ausgebildet ist, um in einer Öffnung installiert zu werden, die in der Wand eines Müllcontainers (10) bestimmt ist, und ein offenes Einlassende (17a) hat, das der Außenseite des Müllcontainers zugewandt ist, und ein offenes Auslassende (17b), das der Innenseite des Müllcontainers (10) zugewandt ist,
- eine Tür (45), die an dem Einlassende (17a) angebracht und mit automatisch gesteuerten Öffnungs-/Schließmitteln (48) ausgestattet ist,
- einen Kennungscodeleser (20),
- mindestens eine erste Serie von Sensoren (26, 28, S1), die angeordnet sind, um einen ersten Transitbereich (L1) zu überwachen, der von dem Abfall durchquert wird, der durch den rohrförmigen Träger (17) in den Container (10) gegeben wird,
- eine Kontrolleinheit (22), die programmiert ist, um das Öffnen der Tür (45) bei Erkennung des Kennungscodes zu ermöglichen, der vom Leser (20) erfasst wird,

**dadurch gekennzeichnet, dass**
die erste Serie von Sensoren eine erste Serie von Infrarotsensoren (26, 28, S1) ist, dadurch, dass sie Folgendes umfasst:

- mindestens einen weiteren Infrarotsensor, angeordnet, um einen zweiten Transitbereich (L2) zu überwachen, der von dem ersten Transitbereich (L1) entlang der Eingaberichtung des Abfalls in den rohrförmigen Träger (17) beabstandet ist, und dadurch, dass die Kontrolleinheit (22) programmiert ist, um das Volumen des hineingegebenen Abfalls anhand der Anzahl von Infrarotsensoren zu bestimmen, die umschalten, wenn der Abfall in den rohrförmigen Träger (17) gegeben wird.

2. Die Hilfsvorrichtung gemäß Anspruch 1, **dadurch gekennzeichnet, dass** sie eine zweite Serie von Infrarotsensoren (34, 36, S2) umfasst, die angeordnet sind, um den zweiten Transitbereich (L2) zu überwachen.

3. Die Hilfsvorrichtung gemäß Anspruch 2, **dadurch gekennzeichnet, dass** die Infrarotsensoren der ersten Serie (26, 28) und die Infrarotsensoren der zweiten Serie (34, 36, S2) entlang zweier entsprechender Reihen in rechten Winkeln zueinander angeordnet sind.

4. Die Hilfsvorrichtung gemäß Anspruch 1 oder 2, **dadurch gekennzeichnet, dass** die Infrarotsensoren der ersten Serie entlang zweier im Wesentlichen koplanarer Reihen in rechten Winkeln zueinander angeordnet sind, um ein erstes Raster (G1, G") von Infrarotstrahlen zu bestimmen.

5. Die Hilfsvorrichtung gemäß Anspruch 2, **dadurch gekennzeichnet, dass** die Infrarotsensoren der zweiten Serie entlang zweier im Wesentlichen koplanarer Reihen in rechten Winkeln zueinander angeordnet sind, um ein zweites Raster (G2) von Infrarotstrahlen zu bestimmen.

6. Die Hilfsvorrichtung gemäß einem oder mehreren der Ansprüche 1 bis 5, **dadurch gekennzeichnet, dass** die mindestens eine Serie von Infrarotsensoren eine Serie von Infrarotstrahlern (26) und eine Serie gegenüberliegender Infrarotempfänger (28) umfasst, die in entsprechende Harzstifte (30) eingebettet sind, welche jeweils von einem profilierten Element (31) getragen werden, in dem ein Durchgang (31c) für die Aufnahme des Stifts (30) angebracht ist; wobei der Durchgang (31c) eine untere Seite (31'c) hat, die zum Ablassen nach unten geneigt und vorne durch eine Abdeckplatte (32) verschlossen ist, welche mit einer Reihe von Bohrungen (33) versehen ist, die mit den Infrarotstrahlern (26) und den Infrarotempfängern (28) ausgerichtet sind.

**7.** Die Hilfsvorrichtung gemäß einem oder mehreren der Ansprüche 1 bis 6, **dadurch gekennzeichnet, dass** sie eine Funkkommunikationsschnittstelle zur Übertragung der gesammelten Daten umfasst, die zu einem bestimmten Nutzer gehören.

**8.** Ein Verfahren zur Berechnung des Volumens des Abfalls unter Verwendung einer Hilfsvorrichtung von der Art, die Folgendes umfasst:

- einen im Wesentlichen rohrförmigen Träger (17), der ausgebildet ist, um in einer Öffnung installiert zu werden, die in der Wand eines Müllcontainers (10) bestimmt ist, und ein offenes Einlassende (17a) hat, das der Außenseite des Containers zugewandt ist, und ein offenes Auslassende (17b), das der Innenseite des Containers (10) zugewandt ist,
- eine Tür (45), die an dem Einlassende (17a) angebracht und mit automatisch gesteuerten Öffnungs-/Schließmitteln (48) ausgestattet ist,
- einen Kennungscodeleser (20),
- mindestens eine erste Serie von Infrarotsensoren (26, 28, S1), die angeordnet sind, um einen ersten Transitbereich (L1) zu überwachen, der von dem Abfall durchquert wird, der durch den rohrförmigen Träger (17) in den Container (10) gegeben wird,
- eine Kontrolleinheit (22), die programmiert ist, um das Öffnen der Tür (45) bei Erkennung des Kennungscodes zu ermöglichen, der vom Leser (20) erfasst wird, und das Volumen des Abfalls anhand der Anzahl von Infrarotsensoren zu bestimmen, die umschalten, wenn der Abfall in den rohrförmigen Träger (17) gegeben wird,

wobei
die Kontrolleinheit (22) programmiert ist, um das Volumen V des Abfalls anhand folgender Formel zu berechnen:

$$V = A*v*t,$$

wobei

- A der transversale Platzbedarf des Abfalls ist, berechnet als Funktion der Anzahl unterbrochener Infrarotstrahlen,
- v eine berechnete Fallgeschwindigkeit ist,
- t eine berechnete Transitzeit ist.

**9.** Das Verfahren gemäß Anspruch 8, wobei die Vorrichtung mindestens einen weiteren Infrarotsensor umfasst, angeordnet, um einen zweiten Transitbereich (L2) zu überwachen, der von dem ersten Transitbereich (L1) entlang der Eingaberichtung von Abfall in den rohrförmigen Träger (17) beabstandet ist, **dadurch gekennzeichnet, dass**

- die berechnete Fallgeschwindigkeit als Funktion einer Eintrittsgeschwindigkeit $v_1 = D/t_1$ und einer Austrittsgeschwindigkeit $v_2 = D/t_2$ gewonnen wird, wobei D der Abstand zwischen dem ersten Transitbereich (L1) und dem zweiten Transitbereich (L2) ist, $t_1$ die Zeit ist, die vergeht zwischen dem Zeitpunkt, zu dem der erste Sensor der ersten Serie (S1) von 0 auf 1 heraufschaltet, und dem Zeitpunkt, zu dem der mindestens eine weitere Infrarotsensor von 0 auf 1 heraufschaltet, und $t_2$ die Zeit ist, die vergeht zwischen dem Zeitpunkt, zu dem der erste Sensor der ersten Serie (S1) von 1 auf 0 herunterschaltet, und dem Zeitpunkt, zu dem der mindestens eine weitere Infrarotsensor von 1 auf 0 herunterschaltet; und
- die berechnete Transitzeit gewählt ist als Funktion der Schaltzeit der ersten Serie ($t_{S1}$) und der Schaltzeit des mindestens einen weiteren Infrarotsensors ($t_{S2}$).

**10.** Das Verfahren gemäß Anspruch 8 oder 9, wobei die Vorrichtung zwei Reihen von Infrarotsensoren umfasst, die senkrecht zueinander sind, **dadurch gekennzeichnet, dass** der transversale Platzbedarf (A) anhand folgender Formel berechnet wird:

$$A = a(1+p)*b(1+q),$$

worin a der Mittenabstand zwischen den Sensoren der ersten Reihe (S1) ist, b der Mittenabstand zwischen den Sensoren der zweiten Reihe (S2) ist und p und q die Anzahl von Lichtstrahlen der ersten Reihe (S1) beziehungsweise der zweiten Reihe (S2) ist, die von dem Abfall unterbrochen werden, der durch den rohrförmigen Träger (17) in den Müllcontainer gegeben wird.

**11.** Das Verfahren gemäß Anspruch 9, **dadurch gekennzeichnet, dass** die Kontrolleinheit (22) programmiert ist, um vor der Berechnung des Volumens eine "Meinungsänderungsprüfung" durchzuführen, die folgende Schritte umfasst:

- das Berechnen der transversalen Fläche des Abfalls, der das erste Raster passiert ($A_{in}$),
- das Überprüfen, ob mindestens ein Sensor der zweiten Serie (S2) von 0 auf 1 heraufgeschaltet wurde, und
- wenn dies nicht der Fall ist, das Überprüfen, ob mindestens ein Sensor der ersten Serie (S1) von 1 auf 0 heruntergeschaltet wurde, und wenn nicht, das Wiederaufnehmen des vorherigen Schritts; anderenfalls das Zählen eines Missbrauchsereignisses,
- wenn dies der Fall ist, Berechnen der Einlassgeschwindigkeit $v_1$;
- Überprüfen, ob mindestens ein Sensor der ersten Serie (S1) von 1 auf 0 heruntergeschaltet wurde, und
- wenn dies nicht der Fall ist, das Überprüfen, ob mindestens ein Sensor der zweiten Serie (S2) von 1 auf 0 heruntergeschaltet wurde, und
- wenn dies nicht der Fall ist, das Wiederaufnehmen des vorhergehenden Schritts; anderenfalls, das Berechnen der Schaltzeit der ersten Serie ($t_{S1}$), das Warten darauf, dass die erste Serie von 1 auf 0 herunterschaltet, das Berechnen der Schaltzeit der ersten Serie ($t_{S1}$), das Neuberechnen des transversalen Platzbedarfs des Abfalls, der die erste Serie passiert ($A_{out}$), und das Vergleichen desselben mit der vorhergehenden Messung des transversalen Platzbedarfs ($A_{in}$) und, wenn sie identisch sind, das Zählen eines Missbrachsereignisses; anderenfalls das Wählen der Transitzeit (t),
- wenn dies der Fall ist, das Berechnen der Schaltzeit der ersten Serie ($t_{S1}$), das Warten darauf, dass die zweite Serie (S2) von 1 auf 0 herunterschaltet, das Berechnen der Auslassgeschwindigkeit ($v_2$), das Berechnen der Schaltzeit der zweiten Serie ($t_{S2}$), das Berechnen der Fallgeschwindigkeit (v) und das Wählen der Transitzeit (t).

**12.** Ein Müllcontainer, **dadurch gekennzeichnet, dass** er eine Hilfsvorrichtung gemäß einem oder mehreren der Ansprüche 1 bis 7 umfasst.

## Revendications

**1.** Dispositif auxiliaire destiné à des bennes et adapté pour contrôler le volume de déchets jetés, comprenant :

- un support sensiblement tubulaire (17) qui est adapté pour être installé dans une ouverture définie sur la paroi d'une benne (10) et qui possède une extrémité d'entrée ouverte (17a) tournée vers l'extérieur de la benne et une extrémité de sortie ouverte (17b) tournée vers l'intérieur de la benne (10),
- une porte (45) appliquée à ladite extrémité d'entrée (17a) et munie d'un moyen d'ouverture/de fermeture à commande automatique (48),
- un lecteur de code d'identification (20),
- au moins une première série de capteurs (26, 28, S1) qui sont prévus pour surveiller une première zone de transit (L1) traversée par les déchets introduits dans la benne (10) par le biais dudit support tubulaire (17),
- une unité de commande (22), qui est programmée pour permettre l'ouverture de ladite porte (45) lors de la reconnaissance du code d'identification détecté par le lecteur (20),

**caractérisé en ce que** la première série de capteurs est une première série de capteurs infrarouges (26, 28, S1), et **en ce qu'**il comprend au moins un autre capteur infrarouge prévu pour surveiller une seconde zone de transit (L2) qui est espacée de ladite première zone de transit (L1) dans la direction d'insertion des déchets dans le support tubulaire (17),
et **en ce que** l'unité de commande (22) est programmée pour déterminer le volume des déchets jetés sur la base du nombre de capteurs infrarouges qui se déclenchent lorsque les déchets sont introduits dans le support tubulaire (17).

**2.** Dispositif auxiliaire selon la revendication 1, **caractérisé en ce qu'**il comprend une seconde série de capteurs infrarouges (34, 36, S2) prévus pour surveiller ladite seconde zone de transit (L2).

**3.** Dispositif auxiliaire selon la revendication 2, **caractérisé en ce que** les capteurs infrarouges de ladite première série (26, 28) et les capteurs infrarouges de ladite seconde série (34, 36, S2) sont prévus le long de deux rangées respectives à des angles droits les uns par rapport aux autres.

**4.** Dispositif auxiliaire selon la revendication 1 ou 2, **caractérisé en ce que** les capteurs infrarouges de ladite première série sont prévus le long de deux rangées sensiblement coplanaires à des angles droits les uns par rapport aux autres de façon à définir un premier quadrillage (G1, G") de faisceaux infrarouges.

**5.** Dispositif auxiliaire selon la revendication 2, **caractérisé en ce que** les capteurs infrarouges de ladite seconde série sont prévus le long de deux rangées sensiblement coplanaires à des angles droits les uns par rapport aux autres de façon à définir un second quadrillage (G2) de faisceaux infrarouges.

**6.** Dispositif auxiliaire selon une ou plusieurs des revendications 1 à 5, **caractérisé en ce que** ladite au moins une série de capteurs infrarouges comprend une série d'émetteurs infrarouges (26) et une série de récepteurs infrarouges opposés (28) qui sont intégrés à des tiges en résine respectives (30), chacune supportée par un élément profilé (31) dans lequel un canal (31c) est prévu afin de recevoir la tige (30), ledit canal (31c) ayant une face inférieure (31'c) qui est inclinée vers le bas pour l'évacuation et qui est fermée frontalement par une plaque de recouvrement (32) munie d'une série d'orifices (33) alignés avec lesdits émetteurs infrarouges (26) et lesdits récepteurs infrarouges (28).

**7.** Dispositif auxiliaire selon une ou plusieurs des revendications 1 à 6, **caractérisé en ce qu'**il comprend une interface de communication sans fil destinée à la transmission des données collectées liées à un utilisateur spécifique.

**8.** Procédé de calcul du volume de déchets jetés à l'aide d'un dispositif auxiliaire du type comprenant :

- un support sensiblement tubulaire (17) qui est adapté pour être installé dans une ouverture définie sur la paroi d'une benne (10) et qui possède une extrémité d'entrée ouverte (17a) tournée vers l'extérieur de la benne et une extrémité de sortie ouverte (17b) tournée vers l'intérieur de la benne (10),
- une porte (45) appliquée à ladite extrémité d'entrée (17a) et munie d'un moyen d'ouverture/de fermeture à commande automatique (48),
- un lecteur de code d'identification (20),
- au moins une première série de capteurs (26, 28, S1) qui sont prévus pour surveiller une première zone de transit (L1) traversée par les déchets introduits dans la benne (10) par le biais dudit support tubulaire (17),
- une unité de commande (22), qui est programmée pour permettre l'ouverture de ladite porte (45) lors de la reconnaissance du code d'identification détecté par le lecteur (20) et pour déterminer le volume de déchets jetés sur la base du nombre de capteurs infrarouges qui se déclenchent lorsque les déchets sont introduits dans le support tubulaire (17),

dans lequel ladite unité de commande (22) est programmée pour calculer ledit volume V de déchets jetés sur la base de la formule :

$$V = A*v*t$$

où

- A correspond au taux d'occupation d'espace transversal des déchets, calculé en fonction du nombre de faisceaux infrarouges interrompus,
- v est une vitesse de chute calculée,
- t est un temps de transit calculé.

**9.** Procédé selon la revendication 8, dans lequel ledit dispositif comprend au moins un autre capteur infrarouge prévu pour surveiller une seconde zone de transit (L2) qui est espacé de ladite première zone de transit (L1) dans la direction d'insertion des déchets dans le support tubulaire (17), **caractérisé en ce que**

- ladite vitesse de chute calculée est obtenue en fonction d'une vitesse d'entrée $v_1 = D/t_1$ et d'une vitesse de sortie $v_2 = D/t_2$, où D est la distance entre ladite première zone de transit (L1) et ladite seconde zone de transit (L2), $t_1$ est la durée qui s'écoule entre le moment auquel le premier capteur de la première série (S1) passe de 0 à 1 et le moment auquel ledit au moins un autre capteur infrarouge passe de 0 à 1, et $t_2$ correspond à la durée qui s'écoule entre le moment auquel le premier capteur de la première série (S1) passe de 1 à 0 et le moment auquel ledit au moins un autre capteur infrarouge passe de 1 à 0 ; et
- ledit temps de transit calculé est choisi en fonction de la durée de déclenchement de ladite première série ($t_{s1}$) et la durée de déclenchement dudit au moins un autre capteur infrarouge ($t_{s2}$).

**10.** Procédé selon la revendication 8 ou 9, dans lequel ledit dispositif comprend deux rangées de capteurs infrarouges qui sont mutuellement perpendiculaires, **caractérisé en ce que** ledit taux d'occupation d'espace transversal (A) est calculé sur la base de la formule

$$A = a(1+p)*b(1+q),$$

où a correspond à la distance centrale entre les capteurs de la première rangée (S1), b correspond à la distance centrale entre les capteurs de la seconde rangée (S2), et p et q correspondent au nombre de faisceaux lumineux de la première rangée (S1) et de la seconde rangée (S2), respectivement, qui sont interrompus par les déchets introduits dans la benne par le biais dudit support tubulaire (17).

**11.** Procédé selon la revendication 9, **caractérisé en ce que**, avant de calculer le volume, ladite unité de commande (22) est programmée pour exécuter un contrôle de revirement qui comprend les étapes qui consistent à :

- calculer la surface transversale des déchets qui passent par ledit premier quadrillage ($A_{in}$),
- vérifier si au moins un capteur de ladite seconde série (S2) est passé de 0 à 1, et
- si ce n'est pas le cas, vérifier si au moins un capteur de ladite première série (S1) est passé de 1 à 0 et, si ce n'est pas le cas, reprendre à partir de l'étape précédente, et, sinon, décompter un événement de mauvaise utilisation,
- si c'est le cas, calculer ladite vitesse d'entrée $v_1$ ;
- vérifier si au moins un capteur de la première série (S1) est passé de 1 à 0, et
- si ce n'est pas le cas, vérifier si au moins un capteur de la seconde série (S2) est passé de 1 à 0, et
- si ce n'est pas le cas, reprendre à partir de l'étape précédente, et, sinon, calculer ladite durée de déclenchement de la première série ($t_{s1}$), attendre que ladite première série passe de 1 à 0, calculer ladite durée de déclenchement de la première série ($t_{s1}$), recalculer le taux d'occupation d'espace transversal des déchets qui passent par ladite première série ($A_{out}$) et le comparer avec la mesure précédente du taux d'occupation d'espace transversal ($A_{in}$), et, s'ils sont identiques, décompter un événement de mauvaise utilisation, ou, sinon, choisir ledit temps de transit (t),
- si c'est le cas, calculer ladite durée de déclenchement de la première série ($t_{s1}$), attendre que ladite seconde série (S2) passe de 1 à 0, calculer ladite vitesse de sortie ($v_2$), calculer ladite durée de déclenchement de la seconde série ($t_{s2}$), calculer ladite vitesse de chute (v), et choisir ledit temps de transit (t).

**12.** Benne, **caractérisée en ce qu'**elle comprend un dispositif auxiliaire selon une ou plusieurs des revendications 1 à 7.

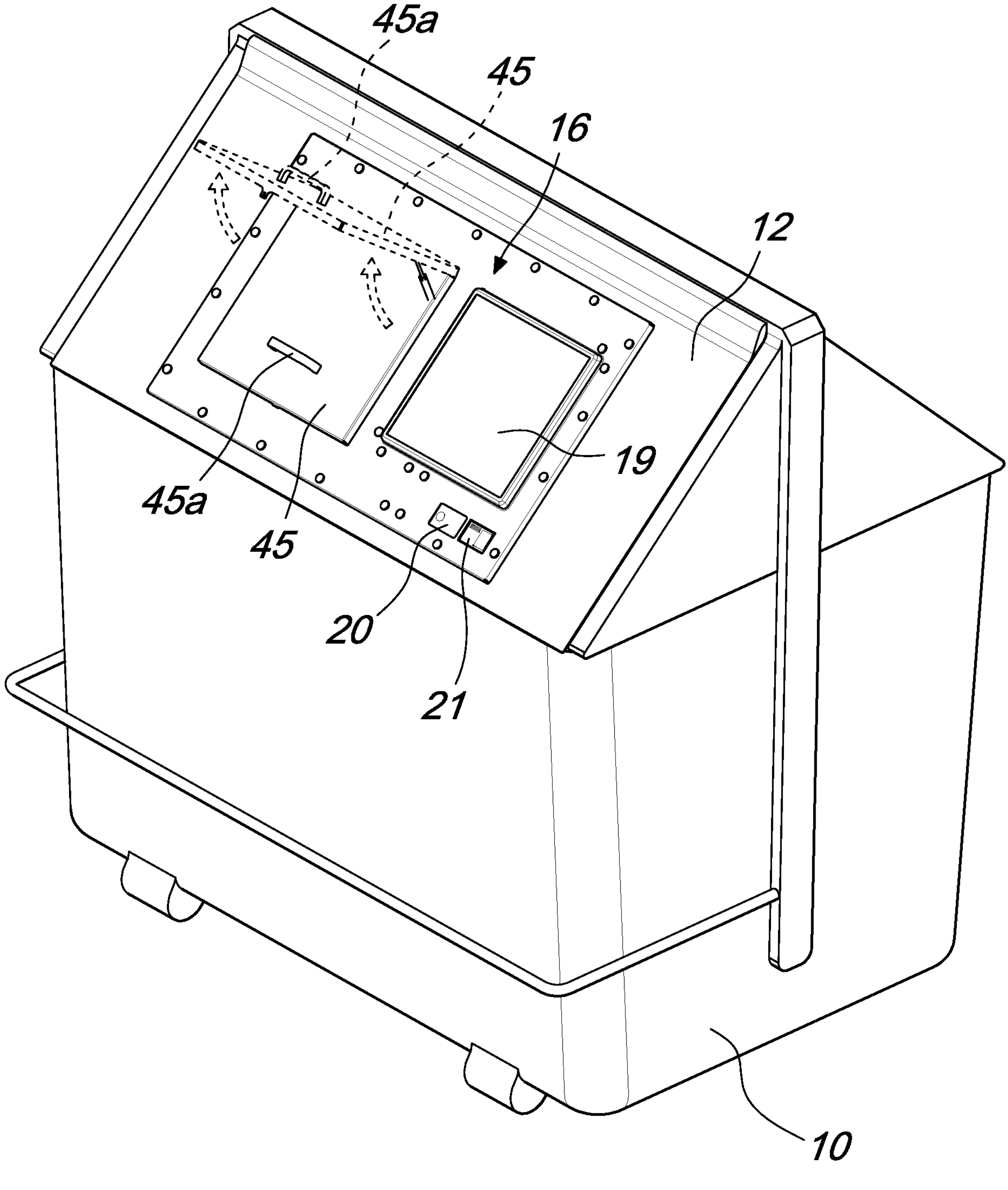


Fig. 1

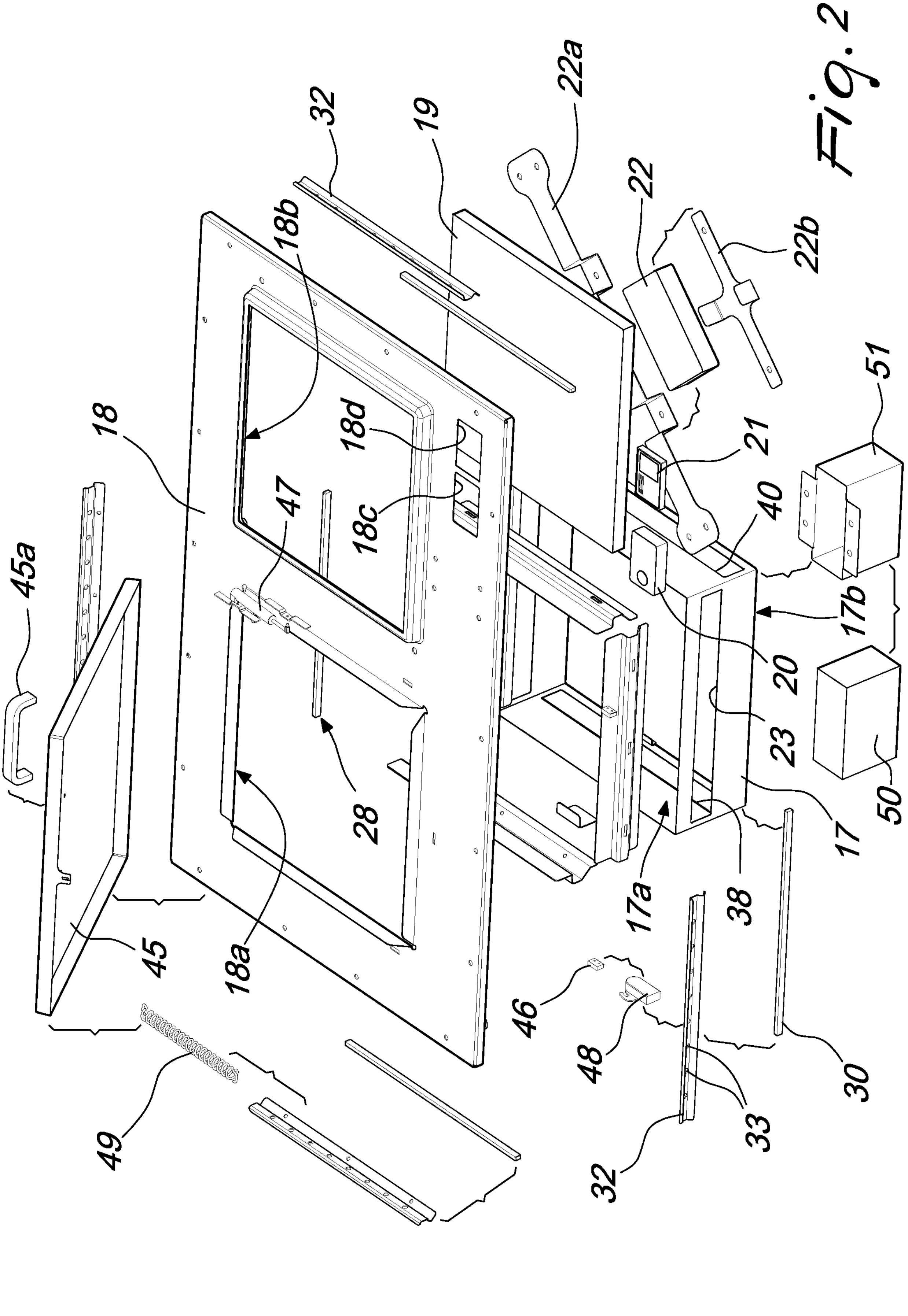
32
19
22a
22
22b
18b
18d
18c
18
47
21
40
51
45a
17b
20
23
28
50
17
18a
17a
38
45
46
48
30
49
33
32

Fig. 2

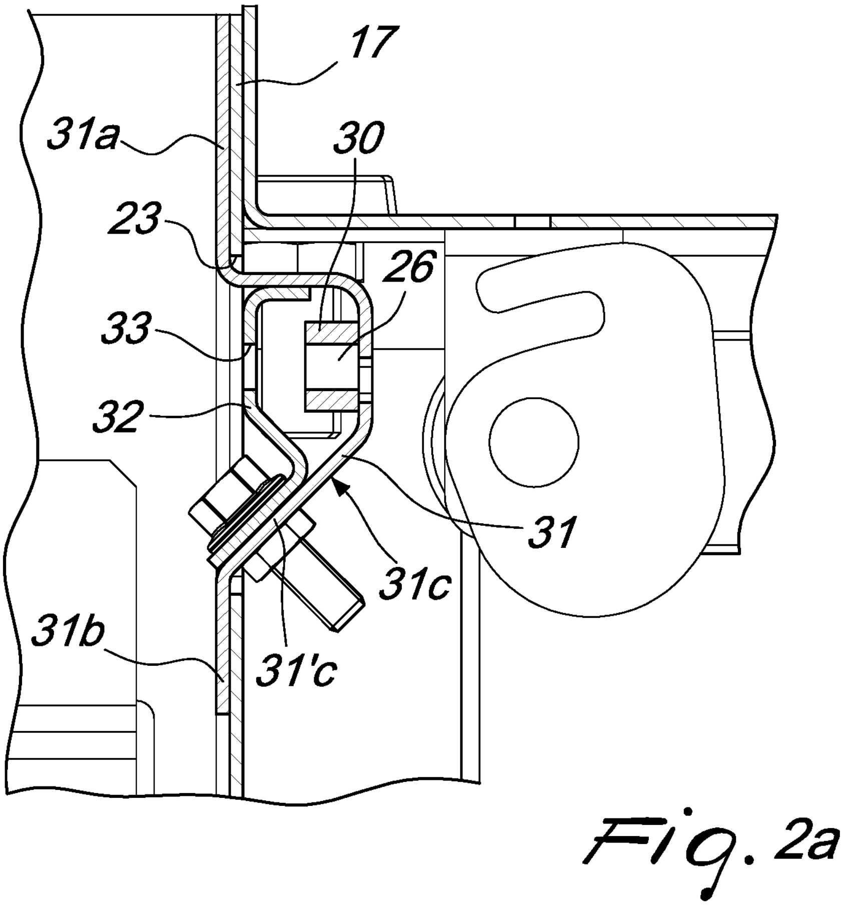


Fig. 2a

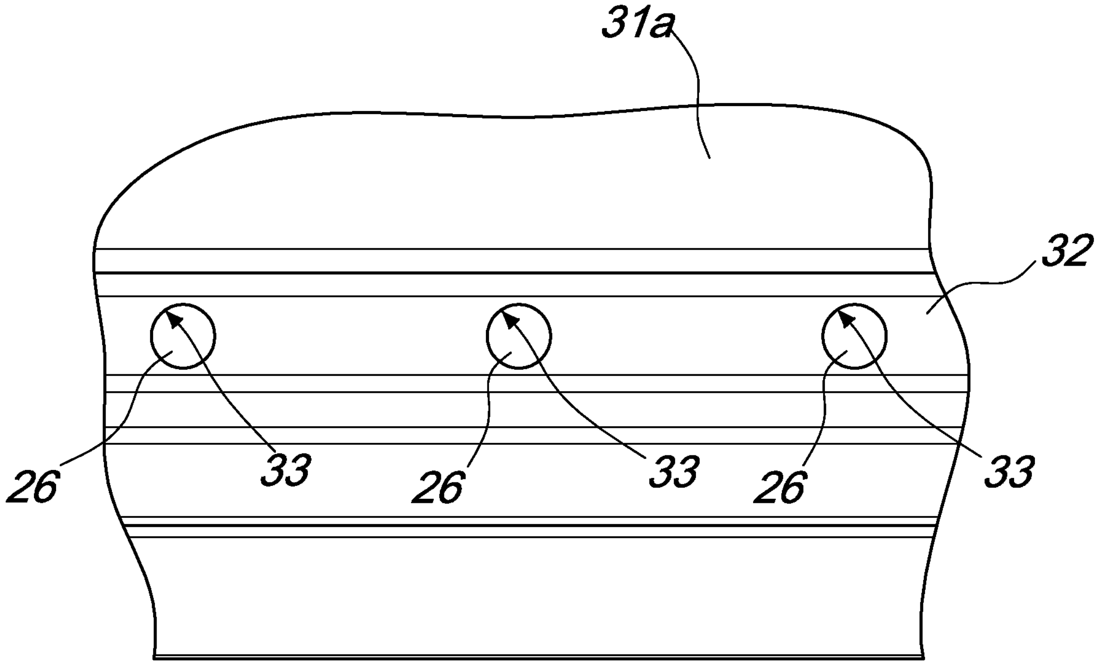


Fig. 2b

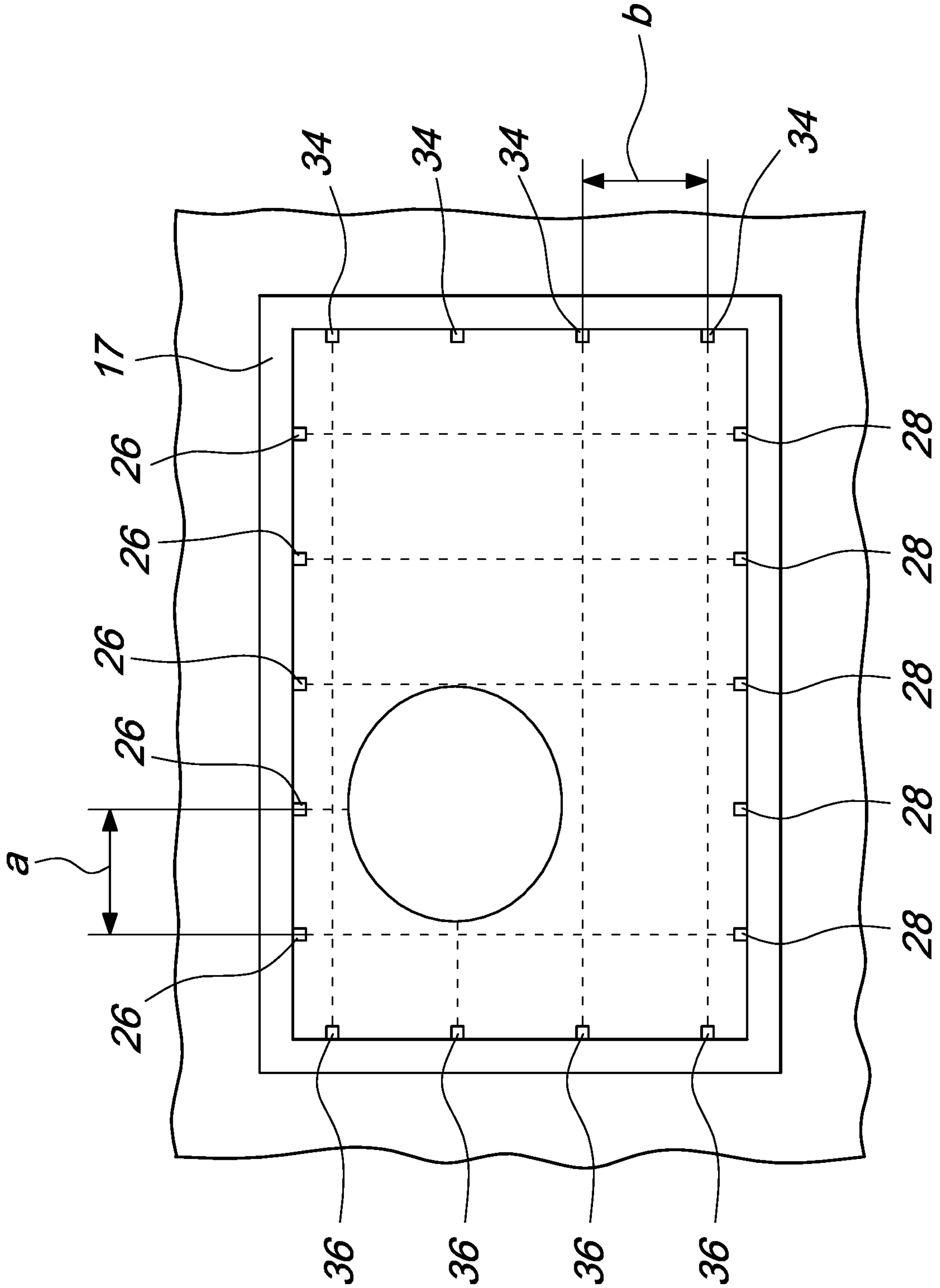


Fig. 3

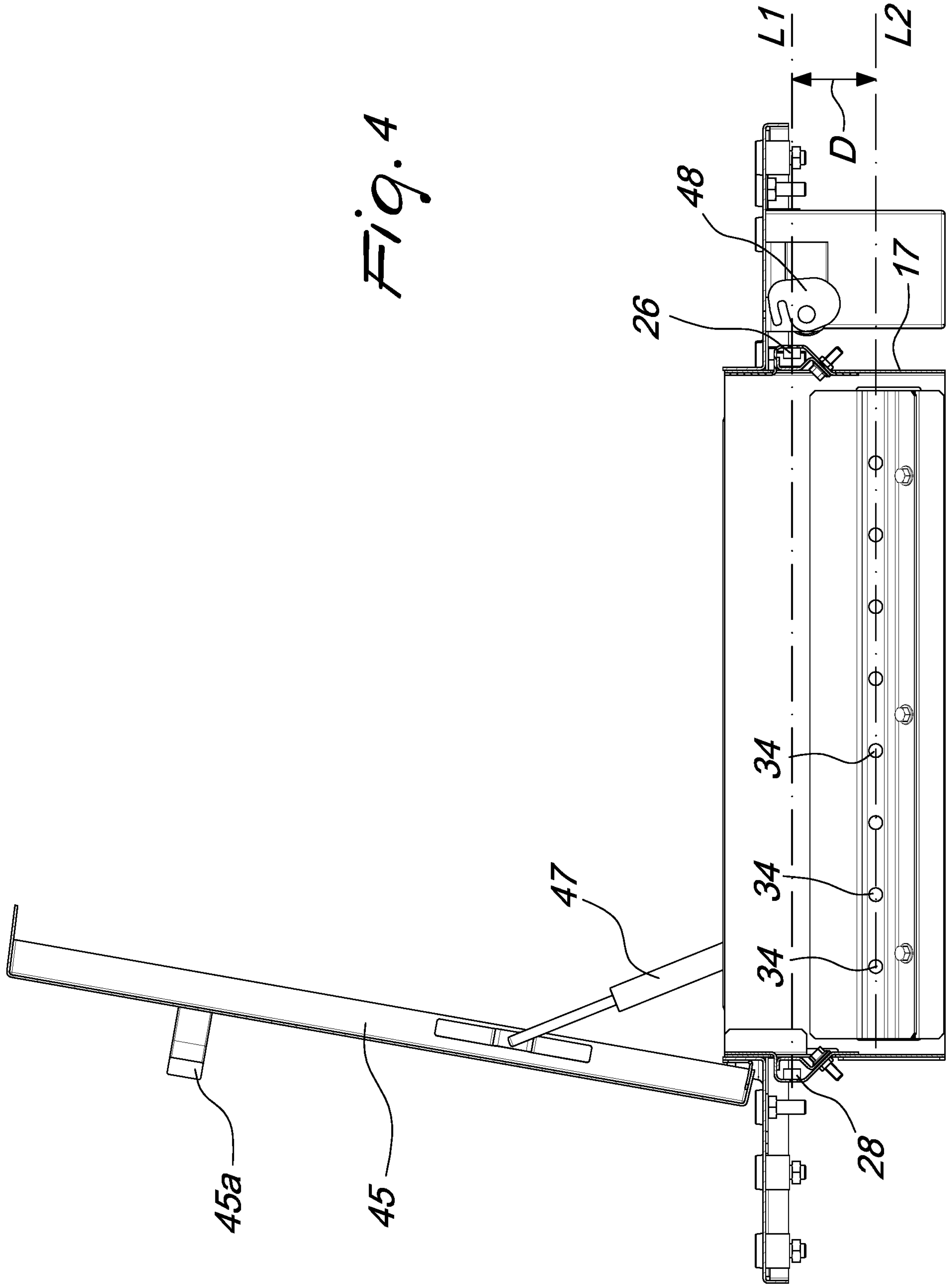


Fig. 4

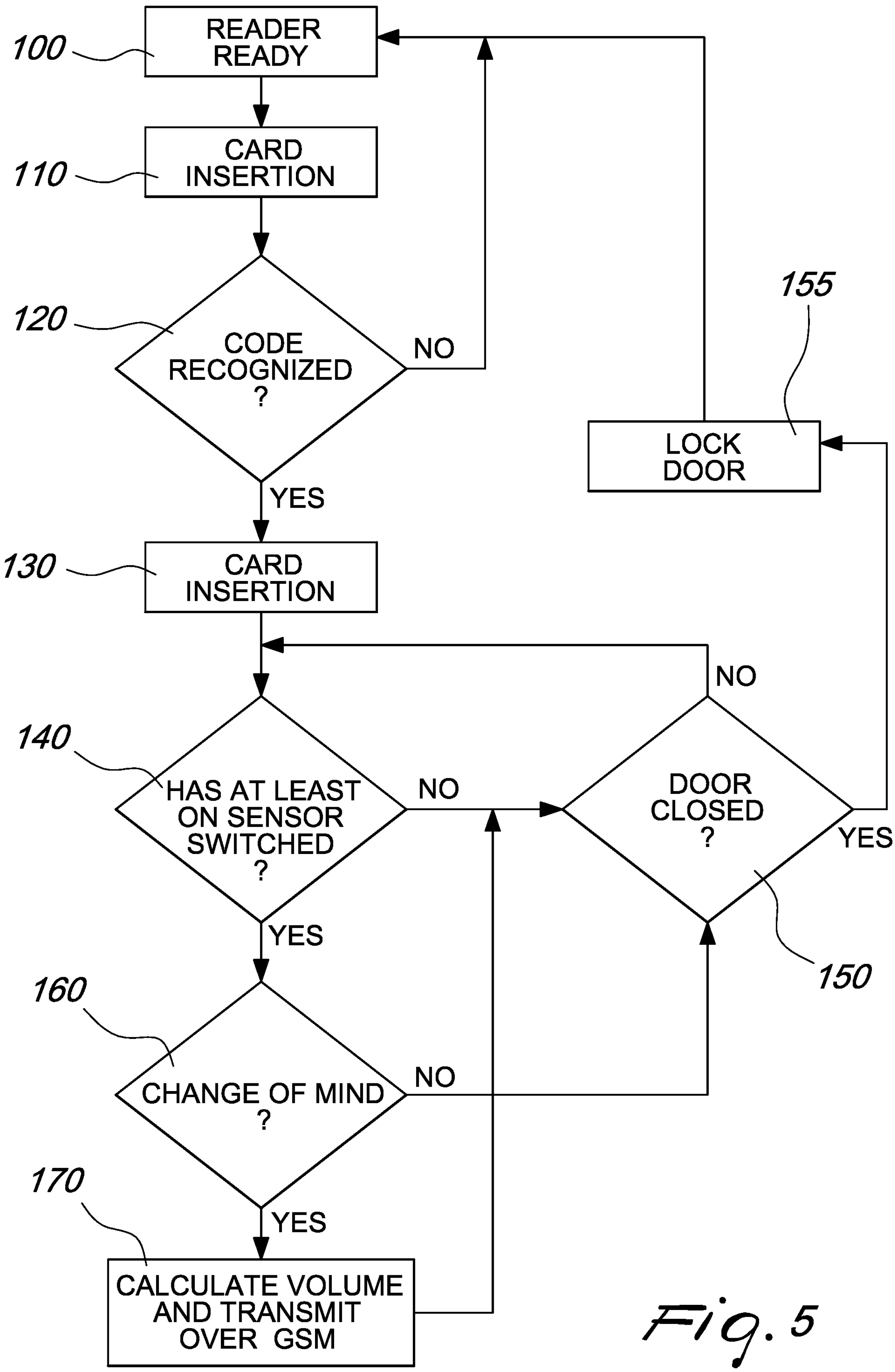
100
READER READY
110
CARD INSERTION
120
CODE RECOGNIZED ?
NO
YES
130
CARD INSERTION
140
HAS AT LEAST ON SENSOR SWITCHED ?
NO
YES
155
LOCK DOOR
150
DOOR CLOSED ?
NO
YES
160
CHANGE OF MIND ?
NO
YES
170
CALCULATE VOLUME AND TRANSMIT OVER GSM

Fig. 5

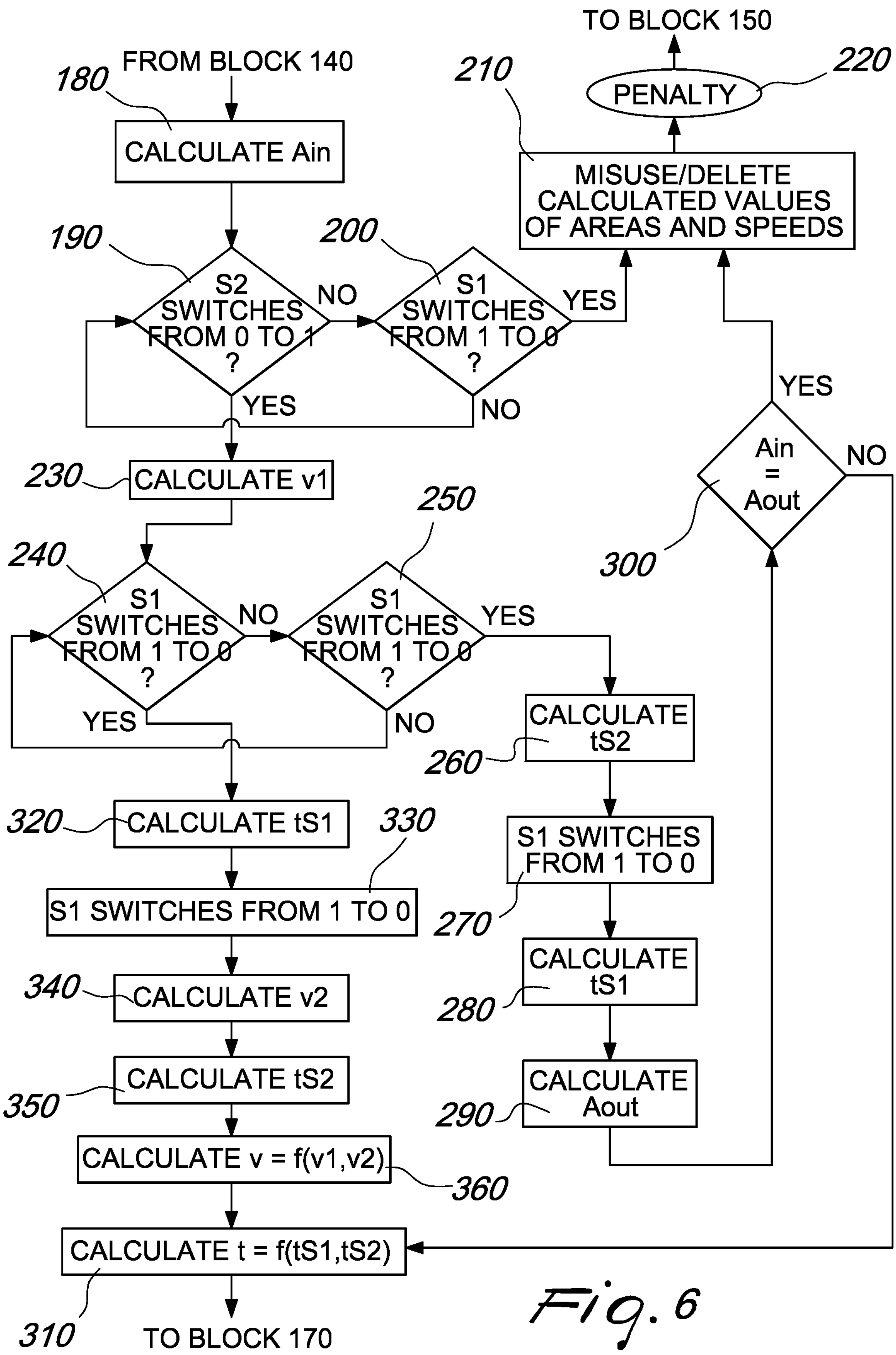
FROM BLOCK 140
180
CALCULATE Ain
190
S2 SWITCHES FROM 0 TO 1 ?
NO
YES
200
S1 SWITCHES FROM 1 TO 0 ?
YES
NO
210
MISUSE/DELETE CALCULATED VALUES OF AREAS AND SPEEDS
PENALTY
220
TO BLOCK 150
230
CALCULATE v1
240
S1 SWITCHES FROM 1 TO 0 ?
NO
YES
250
S1 SWITCHES FROM 1 TO 0 ?
YES
NO
CALCULATE tS2
260
S1 SWITCHES FROM 1 TO 0
270
CALCULATE tS1
280
CALCULATE Aout
290
Ain = Aout
300
YES
NO
320
CALCULATE tS1
330
S1 SWITCHES FROM 1 TO 0
340
CALCULATE v2
CALCULATE tS2
350
CALCULATE v = f(v1,v2)
360
CALCULATE t = f(tS1,tS2)
310
TO BLOCK 170

Fig. 6

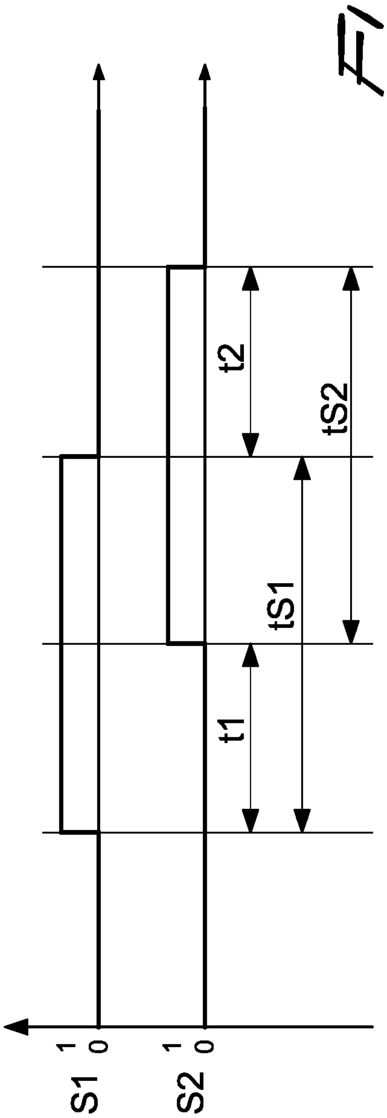


Fig. 7

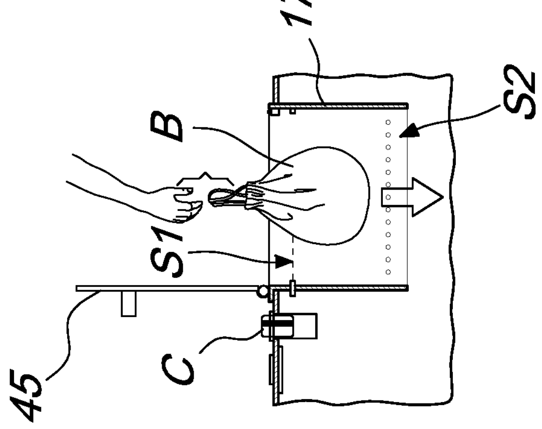


Fig. 8

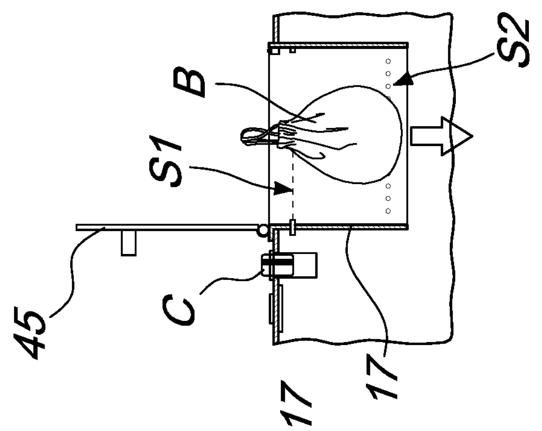


Fig. 9

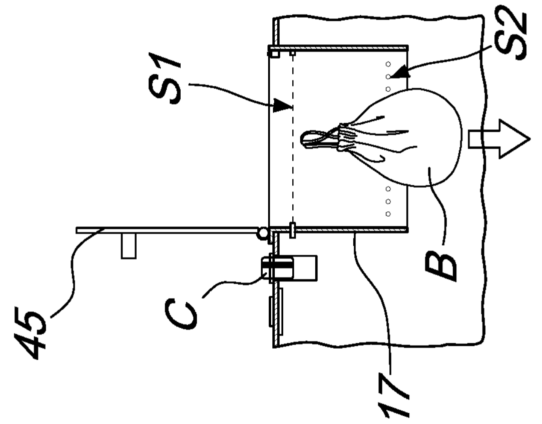


Fig. 10

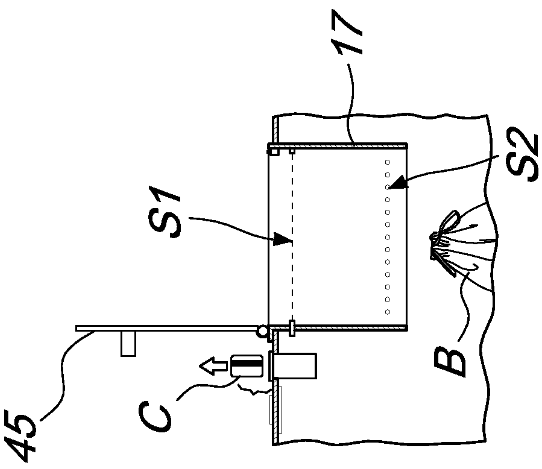


Fig. 11

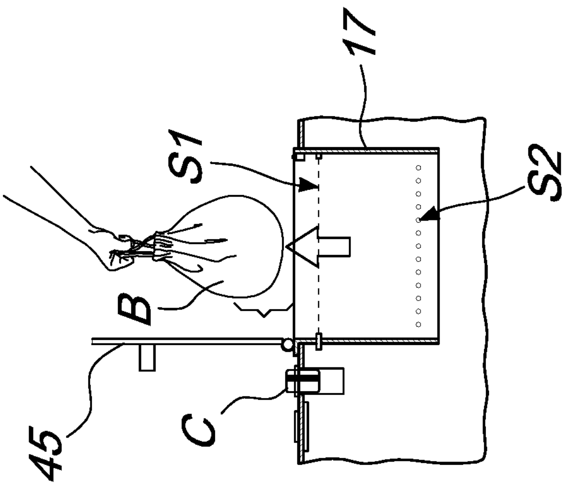

Fig. 14

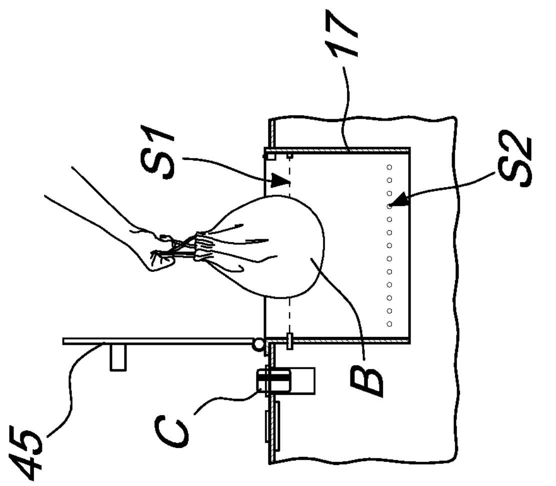

Fig. 13

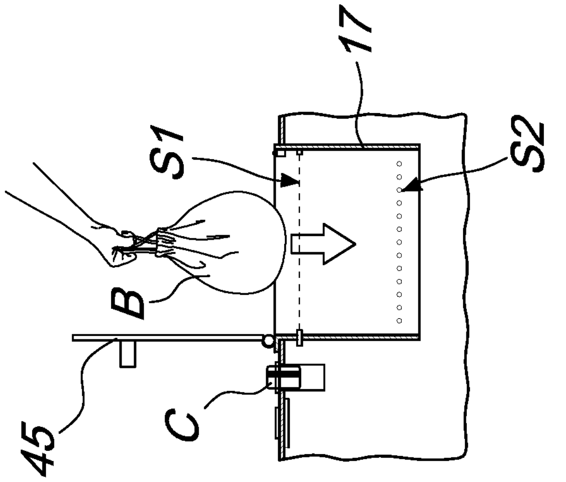

Fig. 12

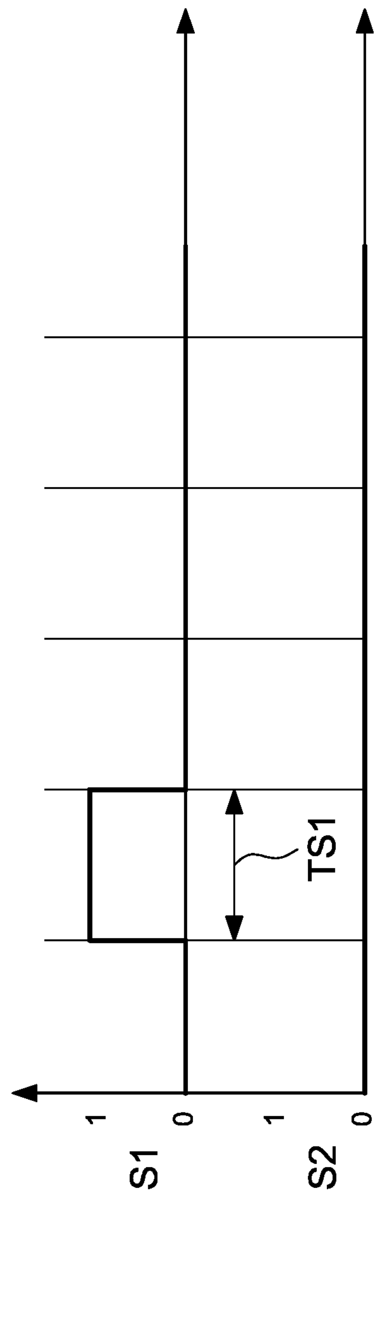

Fig. 15

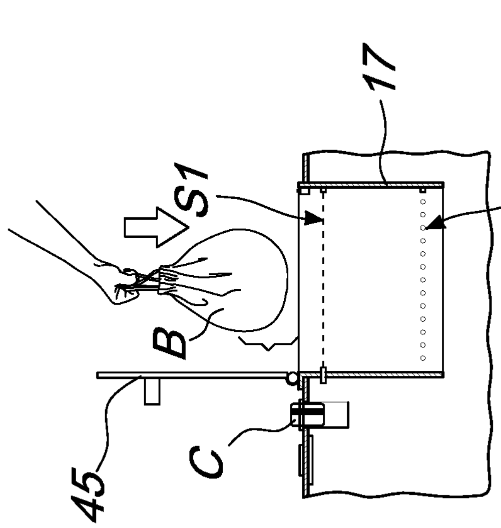

Fig. 16

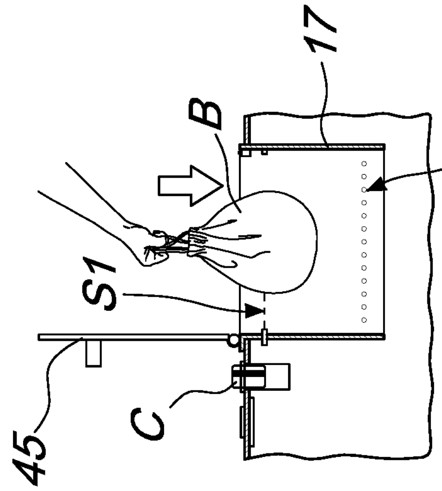

Fig. 17

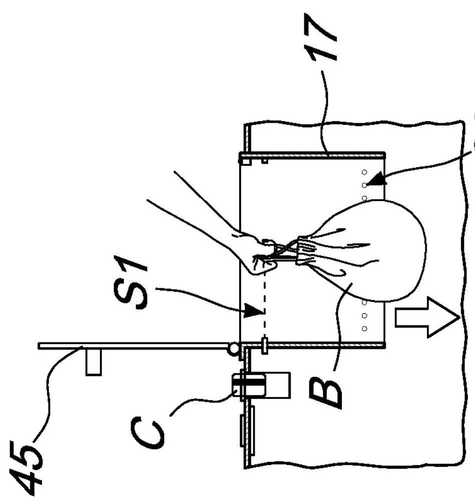

Fig. 18

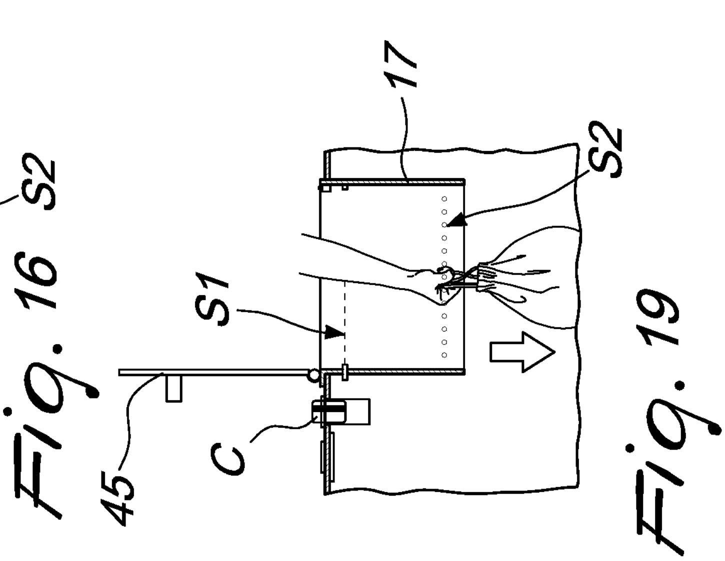

Fig. 19

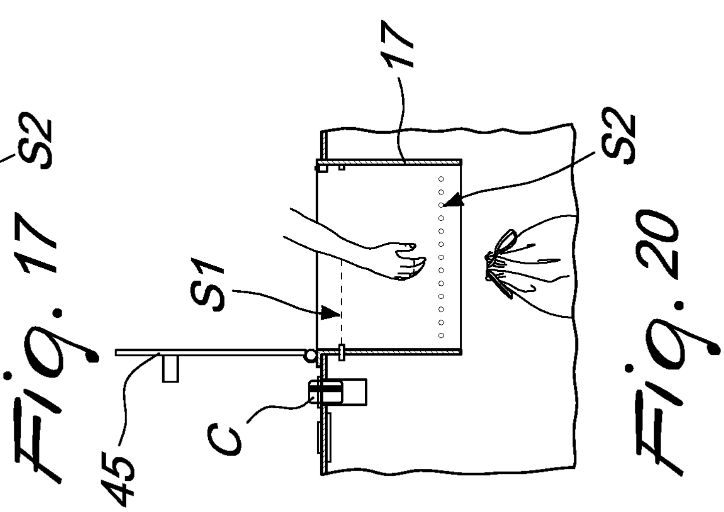

Fig. 20

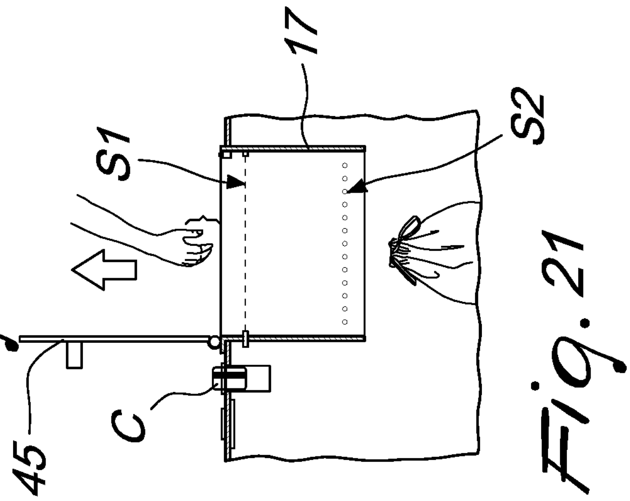

Fig. 21

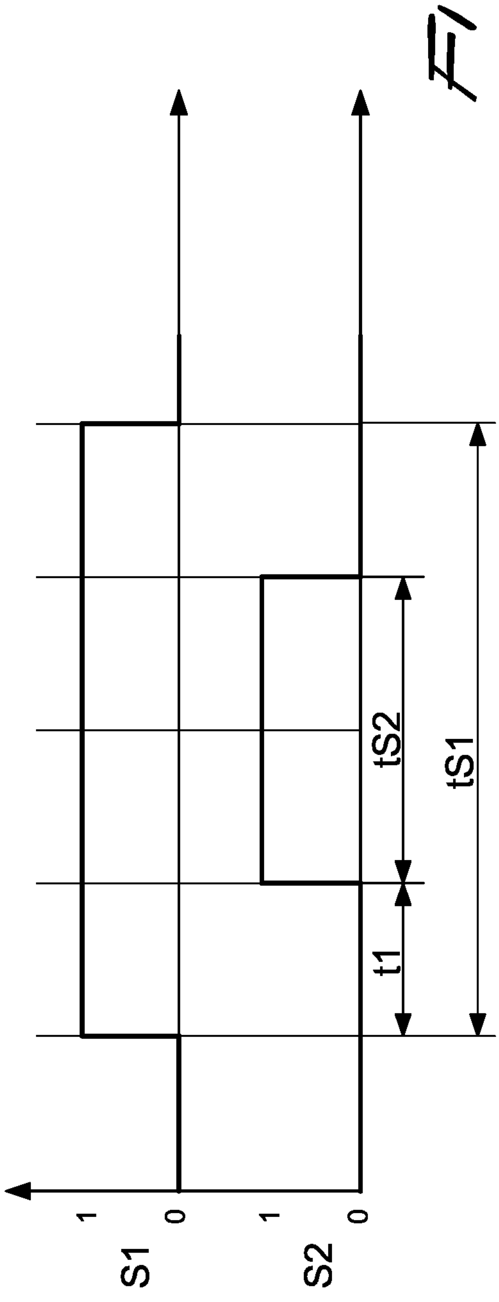


Fig. 22

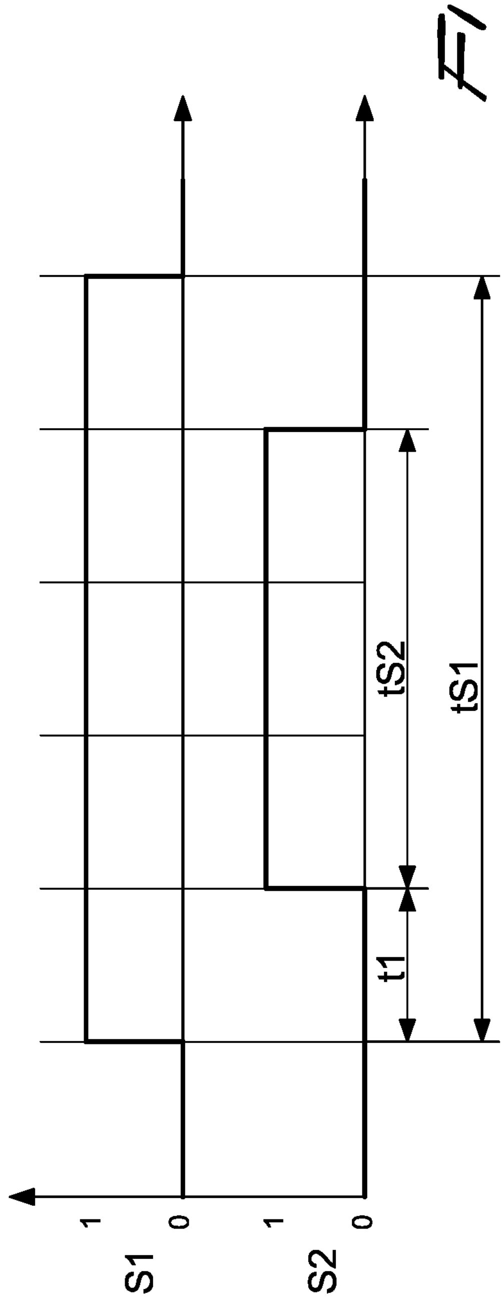


Fig. 30

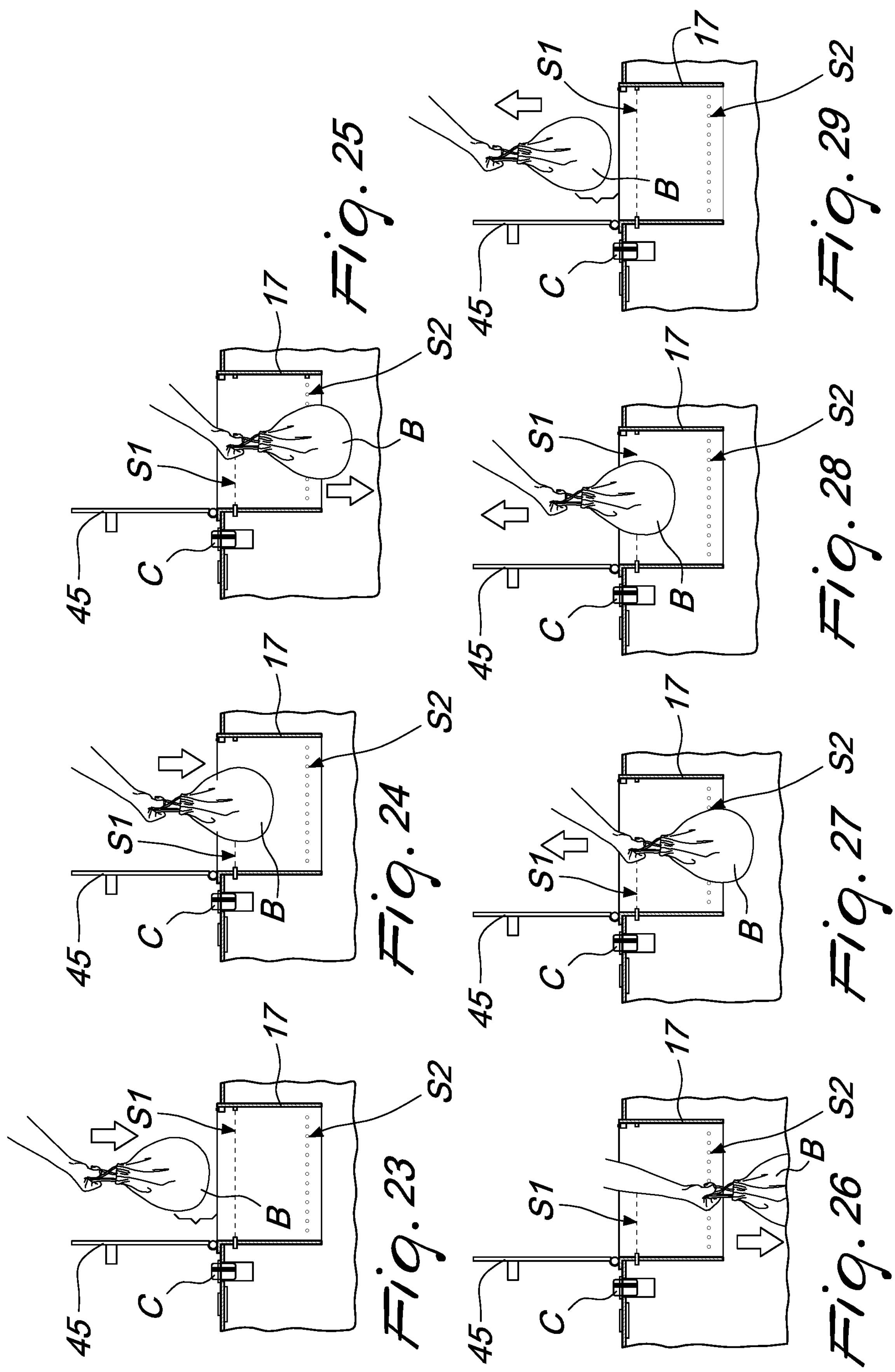


Fig. 23 Fig. 24 Fig. 25 Fig. 26 Fig. 27 Fig. 28 Fig. 29

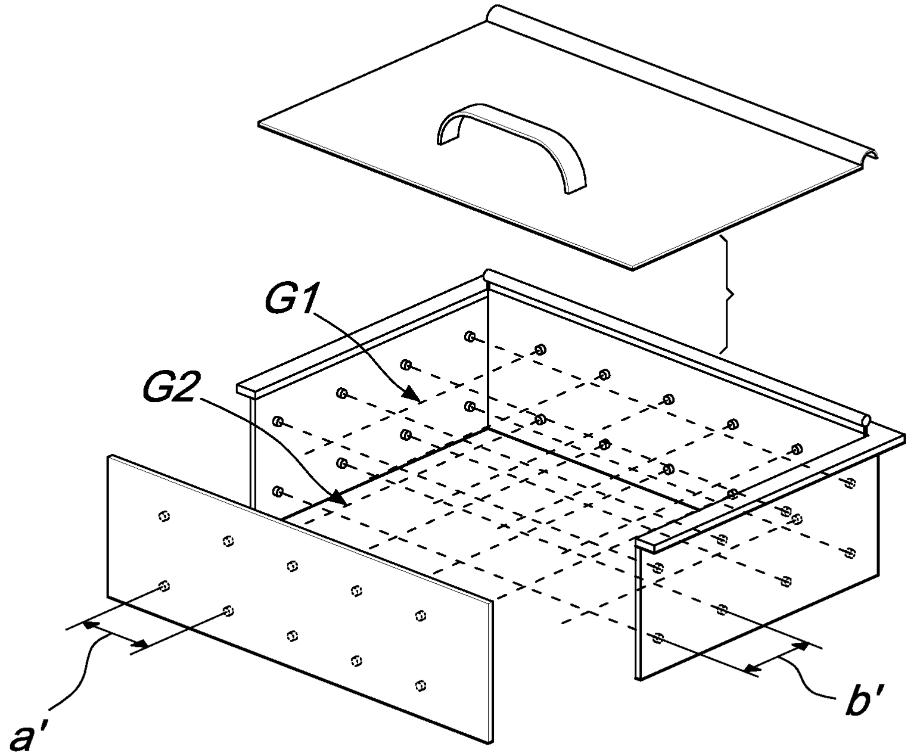


Fig. 31

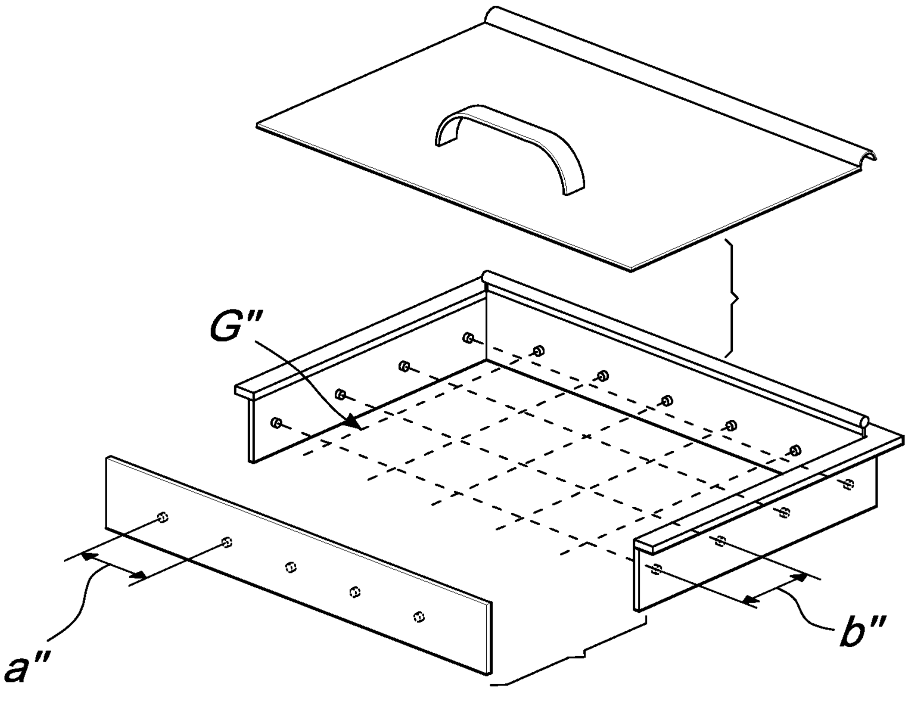


Fig. 32

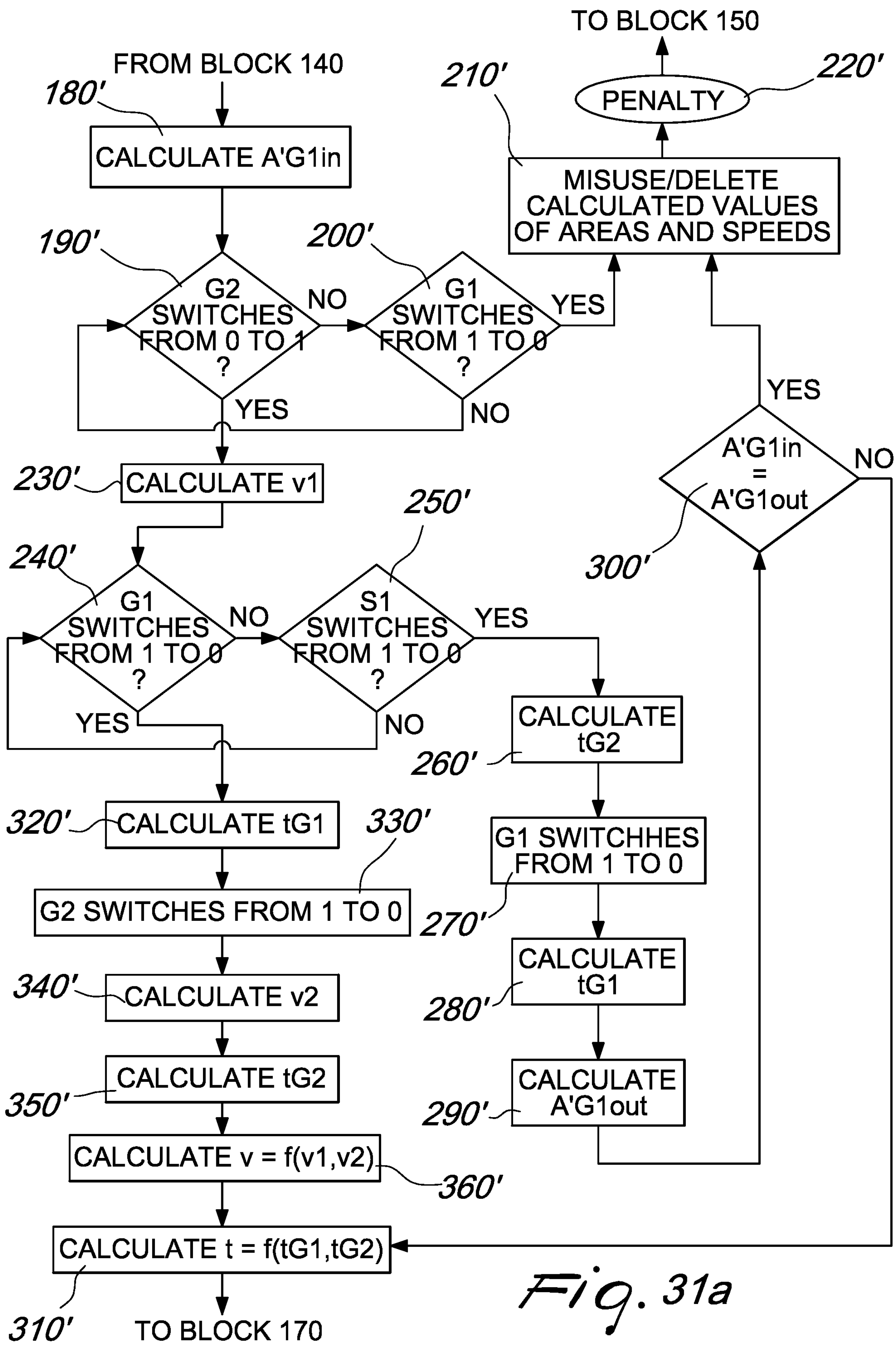
TO BLOCK 150
FROM BLOCK 140
180'
210'
220'
PENALTY
CALCULATE A'G1in
MISUSE/DELETE CALCULATED VALUES OF AREAS AND SPEEDS
190'
200'
G2 SWITCHES FROM 0 TO 1 ?
NO
G1 SWITCHES FROM 1 TO 0 ?
YES
YES
NO
YES
A'G1in = A'G1out
NO
230'
CALCULATE v1
250'
300'
240'
G1 SWITCHES FROM 1 TO 0 ?
NO
S1 SWITCHES FROM 1 TO 0 ?
YES
YES
NO
CALCULATE tG2
260'
320'
CALCULATE tG1
330'
G1 SWITCHHES FROM 1 TO 0
G2 SWITCHES FROM 1 TO 0
270'
340'
CALCULATE v2
CALCULATE tG1
280'
CALCULATE tG2
350'
CALCULATE A'G1out
290'
CALCULATE v = f(v1,v2)
360'
CALCULATE t = f(tG1,tG2)
310'
TO BLOCK 170

Fig. 31a

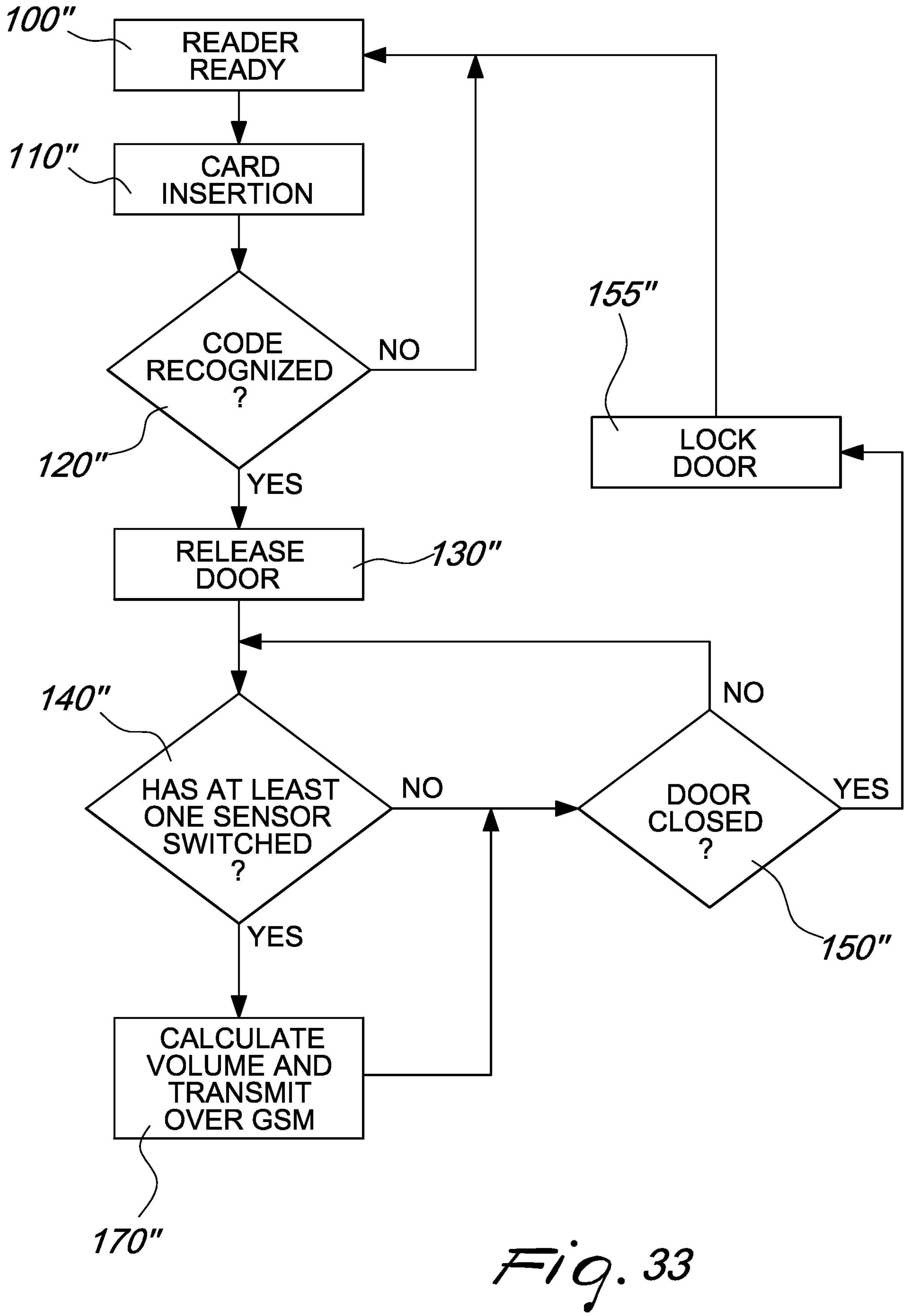
100"
READER READY
110"
CARD INSERTION
CODE RECOGNIZED ?
NO
120"
YES
RELEASE DOOR
130"
155"
LOCK DOOR
140"
HAS AT LEAST ONE SENSOR SWITCHED ?
NO
NO
DOOR CLOSED ?
YES
150"
YES
CALCULATE VOLUME AND TRANSMIT OVER GSM
170"

Fig. 33

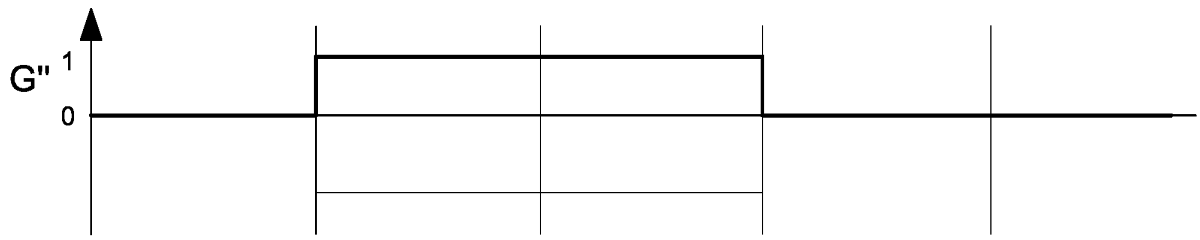


Fig. 34

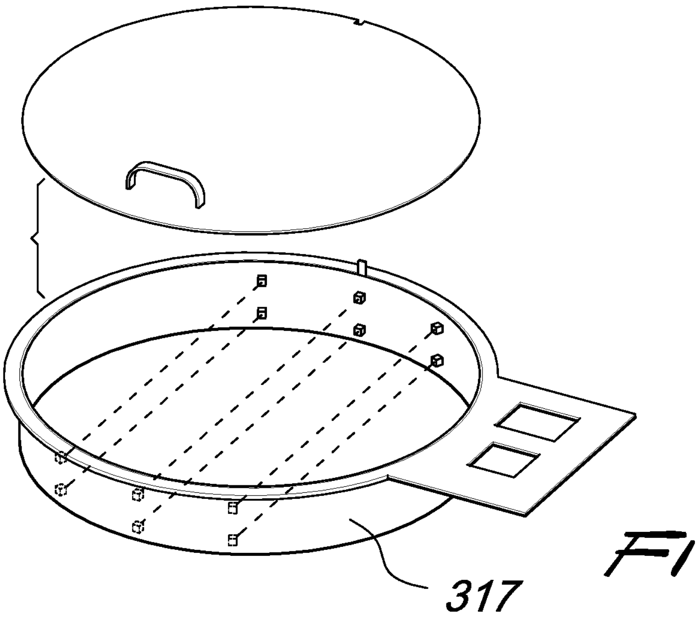


Fig. 35

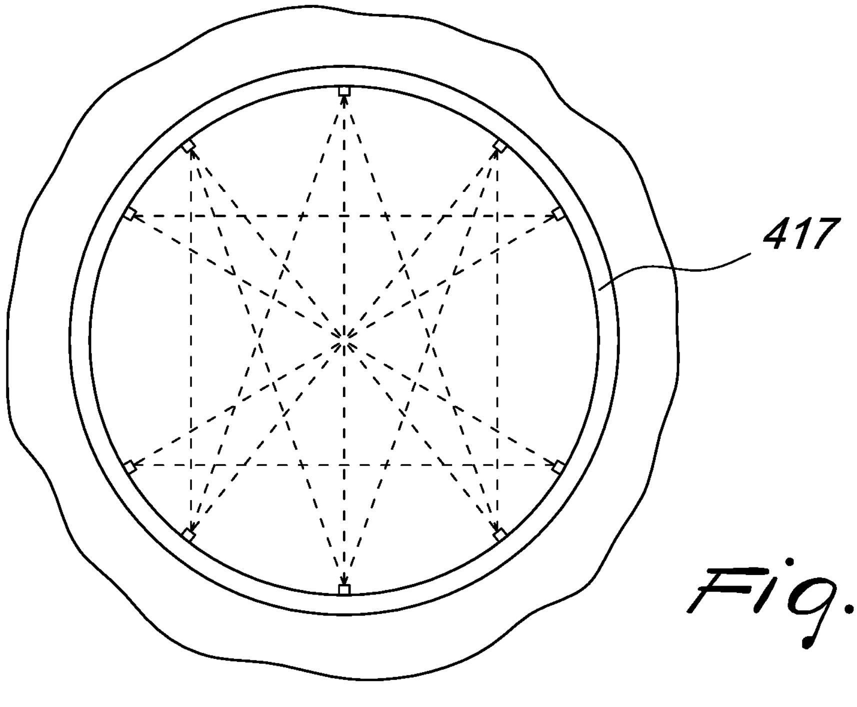


Fig. 36

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 19919678 A1